# EUROPÄISCHE PATENTSCHRIFT

(11) **EP 1 710 285 B1**
(45) Veröffentlichungstag und Bekanntmachung des Hinweises auf die Patenterteilung: **02.01.2008**
(21) Anmeldenummer: 06004266.0
(22) Anmeldetag: 02.03.2006
(51) Int. Cl.: C09D 183/02, C08L 83/02, C08G 77/02, C09D 183/04

(54) **Grundiermittel für hitzehärtbare Siliconelastomere**
Primer compositions for heat curing silicone elastomeres
Compositions de primaire pour des élastomères de silicone thermodurcissables

(30) Priorität: 18.03.2005 DE 102005012694
(43) Veröffentlichungstag der Anmeldung: 11.10.2006
(73) Patentinhaber: Wacker Chemie AG, 81737 München (DE)
(72) Erfinder: Kuhn, Arvid, Dr., 84453 Mühldorf (DE); Pilzweger, Erich, 84387 Julbach (DE)
(74) Vertreter: Fritz, Helmut

(56) Entgegenhaltungen:
- FR-A- 2 809 114
- US-A- 4 287 114

## Beschreibung

Gegenstand der vorliegenden Erfindung ist eine Grundiermittelzusammensetzung, deren Herstellung und Verwendung. Genauer betrifft die Erfindung eine Grundiermittelzusammensetzung für Siliconkautschuke, insbesondere für additions-vernetzende Siliconkautschuke, deren Herstellung sowie ein Verfahren zur Verbesserung der Haftung von Siliconkautschuken auf Substraten, insbesondere auf Metallen.

Siliconelastomere weisen Eigenschaften auf, durch die sie in vielen Anwendungen anderen Elastomeren gegenüber bevorzugt sind, beispielsweise durch ihre thermische Stabilität über einen weiten Temperaturbereich. In manchen Anwendungen werden feste Verbunde zwischen einem weichen, elastomeren Material, wie beispielsweise einem Siliconkautschuk, und einem harten Substrat, wie beispielsweise einem Metall oder einem thermoplastischen Kunststoff, benötigt. Wird durch selbsthaftende Kautschuke, beispielsweise durch deren Beschaffenheit oder geeignete Zusätze, keine ausreichende Bindung zum Substrat erzielt, kann diese Bindung durch Vorbehandlung der Substratoberfläche mit einem geeigneten Grundiermittel verbessert werden.

Die Wirksamkeit der Grundiermittel ist sowohl von der Zusammensetzung sowie der Oberflächenbeschaffenheit des Substrats als auch von der Zusammensetzung, dem Vernetzungssystem, den Zusätzen sowie der Viskosität des Siliconkautschuks, der zur Haftung gebracht werden soll, abhängig. Für Grundierungen gemäß dem Stand der Technik werden beispielsweise Kombinationen von Tetraalkoxysilanen oder deren Teilhydrolysaten mit Metallverbindungen, die aus der Gruppe der Metallalkoxide oder Metallchelate ausgewählt werden können, verwendet. Gegebenenfalls werden diese in Kombination mit einem geeigneten Lösungsmittel eingesetzt.

Die Patentschrift US 2,751,314 beschreibt eine Methode, um Siliconkautschuk auf festen Substraten zur Haftung zu bringen, bei der auf das Substrat eine Beschichtung bestehend aus einem Titanalkoxid und einem Alkylpolysilicat bzw. Teilhydrolysaten hiervon aufgebracht wird.

Die europäische Offenlegungsschrift EP 0 347 049 A2 offenbart verbesserte Grundiermittelzusammensetzungen für die Haftung von Siliconelastomeren zu anorganischen Substraten wie Glas oder Metall. Die Grundierung enthält ein Tetraalkyltitanat, mindestens ein Alkylorthosilicat und ein KohlenwasserstoffLösungsmittel, wobei das Lösungsmittel so zusammengesetzt ist, dass zwischen 2 und 25 Gew.-% der Gesamtzusammensetzung aus einem Alkohol mit zwischen 4 und 20 Kohlenstoffatomen bestehen. Der als Lösungsmittel enthaltene Alkohol, bevorzugt n-Butanol, führt hier dazu, dass die durch die Grundierung zwischen Substrat und Siliconkautschuk aufgebaute Haftung auch nach Wasserlagerung des Verbunds erhalten bleibt.

Die Offenlegungsschrift EP 0 241 851 A2 beschreibt eine Methode zum Streichen von Substraten mit einer Grundierung enthaltend ein Tetraalkyltitanat, ein Organoxysilan, beispielsweise Tetraethylorthosilicat, und einem organischen Lösungsmittel. Die Grundierung dient hier als Schutzüberzug.

Das Patent US 4,356,233 beansprucht Grundiermittelzusammensetzungen enthaltend ein Silan, das keine Amino- oder Amidofunktion enthält, einen Metallester, bevorzugt eine anorganische Säure und ein organisches Lösungsmittel. Bevorzugtes Silan ist Methacryloxypropyltrimethoxysilan. Die Grundierungsschicht wird nach dem Aufbringen auf das Substrat durch Wärme ausgehärtet, bevor eine weitere polymerisierbare Zusammensetzung mit epoxy- oder vinylhaltigen Monomeren aufgetragen wird.

Das europäische Patent EP 0 781 823 B1 beansprucht Grundiermittelzusammensetzungen, bestehend aus einem Alkenyltrialkoxysilan, wobei die Alkenylgruppe mindestens drei Kohlenstoffatome enthält, einer Platinverbindung, durch die die Anbindung des Kautschuks an die Grundierung verbessert wird, einem organischen Titansäureester und einem Lösungsmittel.

Die Offenlegungsschrift US 2003/0116273 A1 offenbart eine Methode, um ein optisches Bauteil, wie beispielsweise eine Glaslinse oder optische Glasfaser, mittels einer Grundiermittelzusammensetzung mit einer haftenden Harzzusammensetzung zu verkleben. Die Grundiermittelzusammensetzung enthält entweder ein epoxy- oder ein alkenylgruppentragendes Trialkoxysilan und weiterhin ein Tetraalkoxysilan, ein Metallalkoxid und ein Lösungsmittel. Derartige Zusammensetzungen führen zu ausgezeichneter Hitzebeständigkeit, ausgezeichneten Trennkräften und unterdrücken die Bildung von Blasen während der Aushärtung und beugen damit verringerter Transparenz in den optischen Bauteilen vor.

Das US-Patent US 4,287,114 beschreibt Grundierungszusammensetzungen, welche die Adhäsion auf Metalloberflächen verbessern. Die Zusammensetzung enthält dabei lineare unfunktionelle Polysiloxane, vinyl-haltige Polysiloxane, ein Organopolysiloxanharz, ein Organosilan, Kieselsäure und Härter (Peroxid und Kondensationskatalysator). Aufgrund der hohen Kettenlänge der eingesetzten Polysiloxane und der Verwendung von Kieselsäure ist die Viskosität derartiger Grundierungen vergleichsweise hoch und damit für viele Anwendungen nicht geeignet. Aus den Beispielen geht hervor, dass die Grundierung vor allem für die Anbindung von peroxid-vernetzenden Siliconkautschuken verwendet werden kann. Durch die Verwendung der Härter (Peroxid; Zinnverbindungen, Amine, die als Platingifte wirken) ist die Zusammensetzung **ungeeignet** für die Anbindung additions-vernetzende Kautschuke an Metalloberflächen.

Die internationale Patentanmeldung WO 2001/88049 A1 beschreibt Grundiermittelzusammensetzungen, enthaltend mindestens ein Tetraalkoxysilan und/oder mindestens ein Alkylpolysilicat, mindestens ein Metallchelat und/oder Metallalkoxid und mindestens ein organisches Lösungsmittel. Die Verwendung eines Tetraalkoxysilans und/oder Alkylpolysilikats mit einem Kondensationsgrad als Verhältnis des Tetraalkoxysilans Si(OR)₄ zu den unterschiedlich stark kondensierten Siloxy-Einheiten aufweisend die Zusammensetzung 0 ≤ Si(OR)₄ ≤ 5, 0 ≤ SiO_{1/2} (OR)₃ ≤ 30, 0 ≤ SiO_{2/2}(OR)₂ ≤ 75, 20 ≤ SiO_{3/2}(OR) ≤ 100 und 0 ≤ SiO_{4/2} ≤ 25 ist dabei bevorzugt. Die Grundiermittelzusammensetzung gemäß WO 2001/88049 A1 wird verwendet, um additions-vernetzende RTV-2 Siliconkautschuke an Aluminium- oder Epoxidharzsubstrate zu binden. Durch die Verwendung von höher kondensierten Tetraalkoxysilanen in den Grundierungen ist die Zusammensetzung weniger empfindlich gegen Feuchtigkeit und führt zu kohäsivem Riss im Kautschuk, auch nach Wasserlagerung der Verbunde.

Der Stand der Technik beschreibt also eine Reihe von Grundiermittelzusammensetzungen und Methoden, um Siliconkautschuk an Substrate anzubinden. Die bekannten Grundiermittelzusammensetzungen erwiesen sich aber unter bestimmten Bedingungen, wie beispielsweise dynamischer Belastung des Verbunds, als nicht ausreichend, so dass die Aufgabe der Erfindung darin bestand, Grundierungen bereitzustellen, die eine verbesserte Haftung von Siliconkautschuk, insbesondere von additions-vernetzendem Siliconkautschuk, zu verschiedenen Substraten, insbesondere zu Metallen, ermöglicht. Die Aufgabe wird durch die Erfindung gelöst.

Gegenstand der vorliegenden Erfindung ist somit eine Grundiermittelzusammensetzung, enthaltend
(A) 100 Gewichtsteile mindestens eines Tetraalkoxysilans oder eines Teilhydrolysats mindestens eines Tetraalkoxysilans,
(B) 25 - 400 Gewichtsteile bezogen auf 100 Gewichtsteile Bestandteil (A) einer Verbindung ausgewählt aus der Gruppe enthaltend Metallsalze, Metallalkoxide, Metallchelate, deren Teilhydrolysate und deren Gemische,
(C) 25 - 125, bevorzugt 40 - 110 Gewichtsteile bezogen auf 100 Gewichtsteile Bestandteil (A) Siliconharz, und
(D) Lösungsmittel ausgewählt aus der Gruppe enthaltend organische Lösungsmittel, niedermolekulare cyclische und lineare Polyorganosiliconverbindungen sowie deren Gemische, mit der Maßgabe, dass der Anteil des Lösungsmittels an der Gesamtzusammensetzung 50 - 95 Gew.-%, bevorzugt 70 bis 90 Gew.-% beträgt.

Der Bestandteil (A) der erfindungsgemäßen Grundiermittelzusammensetzung ist ein Tetraalkoxysilan der allgemeinen durchschnittlichen Formel (I)

Si(OR¹)₄ (I),

worin R¹ einen einwertigen, substituierten oder unsubstituierten Kohlenwasserstoffrest mit 1 bis 18 Kohlenstoffatomen bedeutet,
eine Mischung aus mindestens zwei solchen Tetraalkoxysilanen, ein Teilhydrolysat eines solchen Tetraalkoxysilans oder eine Mischung aus einem oder mehreren Tetraalkoxysilanen und deren Teilhydrolysaten.

Bevorzugt handelt es sich bei R¹ um einen einwertigen Kohlenwasserstoffrest, mit 1 bis 6 Kohlenstoffatomen, wobei der Methyl- und Ethylrest bevorzugt sind. Besonders bevorzugt ist Ethyl.

Ist der Gehalt an Bestandteil (A) in der Gesamtmischung der Grundiermittelzusammensetzung zu niedrig, so wird die gewünschte Haftkraft zwischen Substrat und Kautschuk nicht aufgebaut. Ist der Gehalt zu hoch, so kann die auf das Substrat aufgetragene Grundierungsschicht nach dem Verdunsten des Lösungsmittels spröde oder rissig werden.

Beispiele für Reste R¹ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest und 2-Ethylhexylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R¹ sind Halogenalkylreste, wie der 3,3,3-Trifluor-n-propylrest, der 2,2,2,2',2',2'-Hexafluor-isopropylrest, der Heptafluorisopropylrest und Halogenarylreste, wie der o-, m- und p-Chlorphenylrest, sowie alle für R oben genannten Reste, die vorzugsweise mit Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Acryloxygruppen, Methacryloxygruppen, Hydroxygruppen und Halogengruppen substituiert sein können.
Weitere Beispiele sind alkoxylierte Reste, wie Ethoxyethyl oder Methoxyethyl.

Beispiele für Tetraalkoxysilane als Bestandteil (A) sind Tetramethoxysilan, Tetraethoxysilan, Tetrapropoxysilan, und Tetrabutoxysilan. Weitere Beispiele sind Silane, die zwei oder mehr unterschiedliche Alkoxygruppen enthalten, wie beispielsweise Methoxy- und zusätzlich Ethoxygruppen und/oder Butoxygruppen, wie beispielsweise Triethoxy-monomethoxy-silan, Diethoxy-dimethoxy-silan, Monoethoxy-trimethoxy-silan oder Monomethoxy-tributoxy-silan und andere. Weitere Beispiele sind Silane mit Alkoxyalkoxygruppen, wie beispielsweise Tetrakis(methoxyethoxy)silan oder Tetrakis(methoxypropoxy)silan.

Ist der Bestandteil (A) ein Teilhydrolysat, so ist darunter ein Alkylpolysilicat zu verstehen, das durch partielle Hydrolyse und Kondensation aus den Tetraalkoxysilanen der allgemeinen durchschnittlichen Formel (I) zu erhalten ist. Das Teilhydrolysat kann dabei in einem vorausgehenden Schritt gezielt hergestellt werden oder *in situ* bei der Herstellung der Grundiermittelzusammensetzung entstehen. Für eine gute Reproduzierbarkeit ist ein vorausgehender Reaktionsschritt bevorzugt. Für eine wirtschaftliche Herstellung kann die Teilhydrolyse aber auch während der Herstellung der Gesamtzusammensetzung erfolgen.

Bei der Hydrolyse entstehen aus den Tetraalkoxysilanen Si(OR¹)₄ (im Folgenden als Q0 Einheit bezeichnet) zunächst Silanole und in der Folge durch Kondensation Alkylpolysilicate, die aus
Q1 Einheiten (R¹O)₃SiO_{1/2},
Q2 Einheiten (R¹O)₂SiO_{2/2},
Q3 Einheiten (R¹O)₁SiO_{3/2} und
Q4 Einheiten SiO_{4/2}
bestehen. Je vollständiger die Hydrolyse/Kondensation abläuft, desto größer sind die Anteile der höher kondensierten Einheiten Q4 und Q3 in der Mischung und desto kleiner wird das Verhältnis R¹O-Si/Si von am Silicium gebundenen Alkoxygruppen zu Siliciumatomen. Im Reaktionsprodukt der Hydrolyse/Kondensation kann das Mengenverhältnis der Q0 bis Q4 Einheiten zueinander beispielsweise durch ²⁹Si NMR-Spektroskopie ermittelt werden.

Als Bestandteil (A) in der erfindungsgemäßen Grundiermittelzusammensetzung sind Teilhydrolysate von Tetraalkoxysilanen oder Mischungen von Tetraalkoxysilanen mit ihren Teilhydrolysaten bevorzugt.
Bei der Verwendung von derartigen Teilhydrolysaten sind die resultierenden Zusammensetzungen weniger empfindlich gegen den Einfluss von Feuchtigkeit und damit lagerstabiler und robuster in der Anwendung. Ein weiterer Vorteil der erfindungsgemäßen Ausführung ist, dass die Grundierungsschicht nach dem Auftragen weniger brüchig ist, weil aus dem Festgehalt der Zusammensetzung weniger flüchtige Bestandteile abgespalten werden und damit der Volumenschwund geringer ist. Andererseits ist auch ein zu hoher Kondensationsgrad der Teilhydrolysate in der Zusammensetzung von Nachteil, da dann die Ausbildung einer homogenen Schicht in Zusammenhang mit den weiteren Bestandteilen erschwert wird.

Bevorzugt ist daher ein Bestandteil (A), der aus einer Mischung aus einem oder mehreren Tetraalkoxysilanen und den entsprechenden Teilhydrolysaten besteht und damit oben definierte Einheiten Q0, Q1, Q2, Q3 und Q4 enthalten kann,
wobei der Bestandteil (A)
0 - 45 mol-% Q0 Einheiten,
30 - 80 mol-% Q1 Einheiten,
5 - 50 mol-% Q2 Einheiten,
0 - 20 mol-% Q3 Einheiten
und besonders bevorzugt
5 - 35 mol-% Q0 Einheiten,
35 - 70 mol-% Q1 Einheiten,
10 - 40 mol-% Q2 Einheiten,
1 - 15 mol-% Q3 Einheiten
enthält, worin der Rest zu 100 mol-% durch Q4 gebildet wird. Insbesondere bevorzugt ist ein Teilhydrolysat mit einer derartigen Verteilung, bei dem der Rest R¹ = Ethyl ist.

Als Bestandteil (B) enthält die erfindungsgemäße Grundiermittelzusammensetzung einen oder mehrere Kondensationskatalysatoren für die Hydrolyse und/oder Kondensation der hydrolysierbaren Gruppen der anderen Bestandteile. Als Bestandteil (B) werden daher Metallverbindungen ausgewählt aus der Gruppe enthaltend Metallsalze, Metallalkoxide, Metallchelate, deren Teilhydrolysate und deren Gemische, verwendet.

Bevorzugt werden Alkoxide von Metallen M der allgemeinen durchschnittlichen Formel (II)

M(OR²)ₙ (II),

Chelate von Metallen M der allgemeinen durchschnittlichen Formel (III) 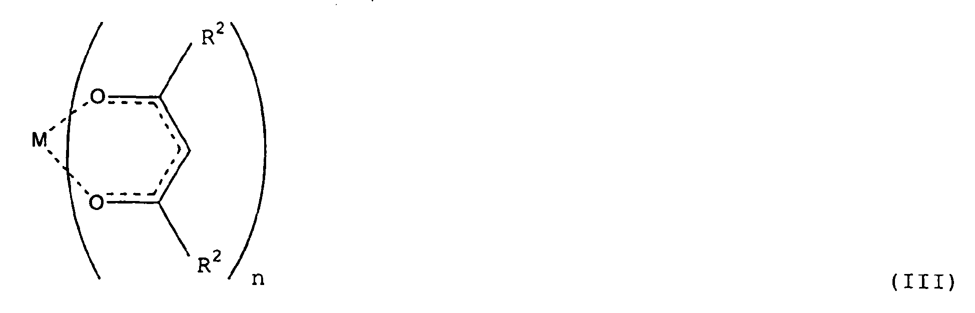 oder Metallcarboxylate der allgemeinen durchschnittlichen Formel (IV)

M(O₂CR³)ₙ (IV)

verwendet, wobei mit n die Valenz des Metalls M bezeichnet wird. Die Metallverbindungen des Bestandteils (B) können als Monomere, als Oligomere, als Hydrolysate oder als Teilhydrolysate vorliegen.

Das Metall M wird ausgewählt aus der Gruppe enthaltend die Metalle Titan, Zirkon, Hafnium, Mangan, Eisen, Kupfer, Zink, Aluminium, Germanium, Zinn und Magnesium. Bevorzugt wird das Metall M ausgewählt aus der Gruppe von Titan, Zirkon, Eisen, Aluminium und Zink, besonders bevorzugt aus der Gruppe bestehend aus Titan, Aluminium und Zirkon.

Der Rest R² wird ausgewählt aus der Gruppe der linearen oder verzweigten, gegebenenfalls substituierten Alkyl- oder Alkenylreste mit 1-18 Kohlenstoffatomen. Der Rest R² kann auch gleich R¹ sein. Im Fall der allgemeinen durchschnittlichen Formel (III) kann R² auch gleich OR² sein. Bevorzugt handelt es sich bei R² um Methyl-, Ethyl-, Propyl, Isopropyl-, Butyl-, Isobutyl-, sec-Butyl-, Acryl-, Methacryl, Ethenyl- und Methylethenylreste. Besonders bevorzugt sind dabei Methyl-, Ethyl-, Butyl-, sec-Butyl- und Methacrylreste.

Der Rest R³ wird bevorzugt ausgewählt aus der Gruppe der linearen oder verzweigten Alkyl- oder Alkenylreste mit 1-18 Kohlenstoffatomen oder aus Resten R². Bevorzugt handelt es sich bei R³ um Methyl-, Ethyl-, Propyl, Isopropyl-, Butyl-, Isobutyl-, sec-Butyl-, Acryl-, Methacryl, Ethenyl- und Methylethenylreste.

Beispiele für Bestandteil (B) sind Tetramethyltitanat, Tetraethyltitanat, Tetra-n-propyltitanat, Tetra-*i*-propyltitanat, Tetra-n-butyltitanat, Tetra-i-butyltitanat, Tetra-*sec*-butyltitanat, Tetraoctyltitanat, Tetra-(2-ethylhexyl)-titanat, Di-i-propoxy-bis(acetylacetonat)titanat, Di-i-propoxy-bis(ethylacetylacetonat)titanat, Tetrakis(trimethylsiloxy)titanat, Di-n-butyl-bis(acetylacetonat)titanat, Di-n-butyl-bis(ethylacetoacetat)titanat, Tri-i-propoxid-bis(acetylacetonat)titanat, Methacryl-tri-i-propyltitanat, Zirkontetraethylat, Zirkontetrabutylat, Zirkontetrabutyrat, Zirkontetrapropylat, Zirkondiacetat, Zirkontetra(acetylacetonat), Zinkdimethacrylat, Tributoxyzirkonacetylacetonat, Dibutoxyzirkon(bis-acetylacetonat), Aluminiumtris(acetylacetonat), Aluminiumtriisopropylat, Aluminiumtrisbutylat und Aluminiumtris(ethylacetylacetonat).

Bevorzugt sind Tetramethyltitanat, Tetraethyltitanat, Tetra-n-propyltitanat, Tetra-i-propyltitanat, Tetra-n-butyltitanat und Tetra-i-butyltitanat. Besonders bevorzugt sind Tetramethyltitanat, Tetraethyltitanat und Tetra-n-butyltitanat.

Die erfindungsgemäßen Zusammensetzungen enthalten, bezogen auf 100 Gewichtsteile (A), 25 - 400 Gewichtsteile Bestandteil (B), bevorzugt 50 - 200 Gewichtsteile (B) und besonders bevorzugt 60 - 180 Gewichtsteile (B). Ist der Anteil an Bestandteil (B) in der Zusammensetzung zu niedrig, so wird die Haftung zwischen Kautschuk und Substrat verschlechtert. Auch verlängert sich die Zeit, die für die Ausbildung eines homogenen Films nach Auftragen der Grundierung auf das Substrat benötigt wird. Ist der Anteil an Bestandteil (B) zu hoch, so kann die Grundierungsschicht brüchig werden, wodurch keine gute Haftung mehr aufgebaut werden kann.

Der Bestandteil (C) ist ein Füllstoff, wie beispielsweise ein Siliconharz oder pyrogene oder gefällte Kieselsäure mit BET-Oberflächen von mindestens 50 m²/g, wobei Siliconharze bevorzugt sind.

Beispiele für Komponente (C) sind MQ-, MT-, MDQ-, MDT-, MTQ und MDTQ-Siliconharze, wobei M gleich R¹₃SiO1/2 oder R¹ₐR⁴₃₋ₐSiO_{1/2} (mit a = 0, 1, 2 oder 3), D gleich R¹₂SiO_{2/2} oder R¹ₐ,R⁴₂₋ₐ,SiO_{2/2} (mit a' = 0, 1 oder 2), T gleich R¹SiO_{3/2} oder R⁴SiO_{3/2} und Q gleich SiO_{4/2} ist, wobei R¹ jeweils unabhängig voneinander einen wie oben beschriebenen Rest oder einen wie oben beschriebenen, über -O- angebunden Rest darstellt und R⁴ jeweils unabhängig voneinander gleich R¹ sein kann oder gleich einem substituierten oder unsubstituierten einwertigen Kohlenwasserstoffrest mit 2 - 18 Kohlenstoffatomen, der aliphatisch ungesättigt ist.

Der Rest R⁴ kann über SiC- oder SiO-C-Bindungen an das Siliconharz angebunden sein.

Ist der Rest R¹ über eine Si-O Bindung an das Harz angebunden, so ist das Strukturelement SiO_{3/2}(OR¹) bevorzugt.

Bevorzugte Beispiele für Reste R⁴ sind Alkenylreste, wie der Vinyl-, 1-Propenyl-, Allyl-, 3-Butenyl-, 4-Pentenyl-, 5-Hexenyl-, Cyclohexenyl-Rest, und Alkinylreste, wie der Ethinyl-, Propargyl- und 1-Propinylrest.

Besonders bevorzugt sind in organischen Lösungsmitteln wie Toluol vollständig lösliche MQ-Harze, die 40 - 70 mol-% Q-Einheiten und 30 - 60 mol-% M-Einheiten, bestimmt durch ²⁹Si-NMR Spektroskopie, aufweisen, und ein mittels Größenausschlusschromatographie (size exclusion chromatography; SEC) bestimmtes zahlenmittleres Molekulargewicht Mₙ von 1.000 - 20.000 g/mol aufweisen. Die bevorzugten Harze weisen SiOR¹ Gruppen auf, wobei das Verhältnis von Q-Einheiten zu Si-OR¹ Gruppen (Q/SiOR¹) bevorzugt bei 4 bis 20 liegt. Die M-, D- und T-Einheiten der verwendeten Harze können R¹ Reste tragen. Bevorzugt sind aber solche Harze, die R¹ und R⁴ Reste aufweisen. Besonders bevorzugt sind weiterhin solche Harze, bei denen das Verhältnis der Reste R¹/R⁴ zwischen 5 und 50, insbesondere bevorzugt zwischen 12 und 35 liegt.

In einer bevorzugten Ausführungsform ist der Bestandteil (C) ein MQ-Harz, wobei R¹ eine Methyl- oder Ethylgruppe und R⁴ eine Vinylgruppe darstellt.

Der Bestandteil (C) ist in den erfindungsgemäßen Zusammensetzungen zu 25 - 250 Gewichtsteilen, bevorzugt 40 - 150 Gewichtsteile, bezogen auf 100 Teile Bestandteil (A), enthalten. Der Bestandteil (C) ist essentiell für die Zusammensetzungen. Bei zu geringem oder gar keinem Anteil an Bestandteil (C) leidet die Festigkeit der Grundierungsschicht oder es bildet sich kein gleichmäßiger Film mehr aus. Bei zu hohen Anteilen kann die Schicht spröde werden. In jedem Fall resuliert eine deutlich verschlechterte Bindung des Kautschuks an das Substrat.

Bestandteil (D) ist ein Lösungsmittel, das ausgewählt wird aus der Gruppe der organischen Lösungsmittel und der niedermolekularen cyclischen oder linearen Polyorganosiliconverbindungen, in dem die anderen Bestandteile der Zusammensetzung gelöst, teilweise gelöst oder suspendiert bzw. emulgiert werden. Die Wahl des Lösungsmittels ist von verschiedenen Faktoren abhängig, wie beispielsweise von der Flüchtigkeit, von der Polarität und dem Lösungsvermögen die anderen Bestandteile zu lösen. Die Wahl des Lösungsmittels beeinflusst auch die Fähigkeit der Zusammensetzung die Substratoberfläche zu benetzen.

Lösungsmittel mit hohem Dampfdruck führen zu kurzen Trocknungszeiten, was aufgrund der schnelleren Verarbeitbarkeit bevorzugt sein kann. Zu hohe Dampfdrucke können andererseits ein zu schnelles Abdampfen des Lösungsmittels bewirken, was dazu führen kann, dass sich kein homogener Film ausbildet. Andererseits sollte der Dampfdruck des Lösungsmittels auch nicht so niedrig sein, dass das Abdampfen des Lösungsmittels zu lange dauert oder ein Teil des Lösungsmittels auf dem Substrat zurückbleibt, da das die Haftung des Kautschuks beeinträchtigen wird. Da die Geschwindigkeit der Hydrolyse/Kondensation der hydrolysierbaren Gruppen mit der Temperatur steigt, kann das Lösungsmittel auch an die gewünschte Verarbeitungstemperatur angepaßt werden. Optimal ist eine Zusammensetzung, die über einen weiten Temperaturbereich das Ausbilden eines gleichmäßigen Films ermöglicht.

Beispiele für Bestandteil (D) sind organische Lösungsmittel wie Kohlenwasserstoffe, wie substituierte oder unsubstituierte Alkane oder Cycloalkane, beispielsweise Pentan, Hexan, Cyclohexan, Heptan, Octan, Isooctan, 2-Ethylhexan, Nonan, Decan und höhere lineare oder verzweigte Alkane oder Mischungen solcher Alkane, Dichlormethan, Trichlormethan, Trichlorethylen; substituierte oder unsubstituierte aromatische Kohlenwasserstoffe, wie beispielsweise Benzol, Toluol, Xylole, Chlorbenzol oder Mischungen; Ester, wie beispielsweise Essigsäuremethylester, Essigsäureethylester; Ketone, wie beispielsweise Aceton, Methylethylketon, Methyl-isobutylketon, Cyclohexanon; lineare oder cyclische Ether, wie beispielsweise Diethylether, Dipropylether, Dibutylether, t-Butyl-methylether, Tetrahydrofuran, 1,4-Dioxan; substituierte oder unsubstituierte Alkohole, wie beispielsweise Methanol, Ethanol, n-Propanol, i-Propanol, n-Butanol, i-Butanol, sec-Butanol, tert.-Butanol, 1-Pentanol, 2-Pentanol, 3-Pentanol, i-Pentanol, Ethylhexanol, Cyclohexanol, Glykole, wie beispielsweise Ethylenglykoldimethylether.

Kohlenwasserstoffe mit Siedepunkten unter etwa 50°C sind in der Regel wegen des zu schnellen Abdampfens ungeeignet, wenn sie als einziges Lösungsmittel oder als Hauptbestandteil verwendet werden. Bevorzugt bei Kohlenwasserstoffen sind Alkane oder Mischungen von Alkanen deren Siedepunkte zwischen 60 und 250°C liegen, besonders bevorzugt zwischen 90 und 200°C. Werden Alkanmischungen oder Destillatfraktionen verwendet, so umfasst der Siedebereich der Mischung bevorzugt nicht mehr als 50°, besonders bevorzugt nicht mehr als 30°.

Bei Alkoholen sind Ethanol, i-Propanol und sec-Butanol bevorzugt, besonders bevorzugt ist sec-Butanol.

Weitere Beispiele für Komponente (D) sind niedermolekulare cyclische oder lineare Polyorganosiliconverbindungen. Beispiele sind lineare Polyorganosiliconverbindungen, wie beispielsweise Hexamethyldisiloxan, Octamethyltrisiloxan oder höhere Oligomere, und cyclische Polyorganosiliconverbindungen, wie beispielsweise Hexamethylcyclotrisiloxan, Octamethylcyclotetrasiloxan, Decamethylcyclopentasiloxan und höhere cyclische Polyorganosiliconverbindungen, oder Mischungen verschiedener linearer und/oder cyclischer Polyorganosiliconverbindungen.

Der Bestandteil (D) kann aus einem einzelnen organischen Lösungsmittel, einer einzelnen Polyorganosiliconverbindung bestehen, Mischungen verschiedener organischer Lösungsmittel, Mischungen verschiedener Polyorganosiliconverbindungen oder aus Mischungen von organischen Lösungsmitteln mit Polyorganosiliconverbindungen.

Die Zusammensetzungen enthalten die Komponente (D) in Anteilen zwischen 50 und 95 Gewichtsprozent der Gesamtzusammensetzung, bevorzugt zwischen 70 und 90 Gewichtsprozent.

Das optimale Lösungsmittel bzw. Lösungsmittelgemisch für eine Zusammensetzung kann auch abhängig sein von der jeweiligen Anwendung, d.h. von der Zusammensetzung des Substrats, der Substratoberfläche oder den Verarbeitungsbedingungen, wie beispielsweise der gewünschten Dauer und der gewünschten Temperatur beim Ablüften bzw. Einbrennen der Grundierung.

Für die Ausbildung eines gleichmäßigen Grundiermittelfilms ist eine gute Benetzung der Substratoberfläche durch die Grundiermittelzusammensetzung Voraussetzung. Dabei ist die Fähigkeit der Zusammensetzung, die Substratoberfläche zu benetzen, abhängig von der Oberflächenspannung der Zusammensetzung und der Oberflächenenergie der Substratoberfläche. Die Oberflächenspannung der Zusammensetzung wird zu einem großen Teil von der Oberflächenspannung des Lösungsmittels bestimmt. Lösungsmittel mit relativ hohen Oberflächenspannungen γ wie Toluol oder Xylole (etwa γ = 28 mN/m bei 25°C; Quelle: CRC Handbook of Chemistry and Physics, 84. Aufl., Boca Raton 2003) können bei manchen Substraten zu Benetzungsschwierigkeiten führen. Niedrige Oberflächenspannungen führen in der Regel zu einer besseren Benetzbarkeit, wobei die Grenze bei der kritischen Oberflächenspannung des Substrats liegt; eine Flüssigkeit mit einer Oberflächenspannung unterhalb dieses Werts benetzt die Oberfläche. Lösungsmittel mit geringerer Oberflächenspannung, wie beispielsweise aliphatische Kohlenwasserstoffe oder auch Organosiliconverbindungen wie Hexamethyldisiloxan, sind daher bevorzugt, wenn die anderen Eigenschaften wie Dampfdruck oder Lösungsvermögen nicht dagegen stehen. Werden aufgrund des Lösungsvermögens polarere Lösungsmittel benötigt, so sind Alkohole bevorzugt. Besonders bevorzugt sind i-Propanol und sec.-Butanol. Auch Mischungen sind möglich. So kann die erfindungsgemäße Grundiermittelzusammensetzung beispielsweise mit sec.-Butanol als Lösungsmittel hergestellt werden und vor der Verwendung mit aliphatischen Kohlenwasserstoffen oder Alkoholen wie Ethanol oder i-Propanol verdünnt werden.

In einer bevorzugten Ausführungsform enthält die erfindungsgemäße Grundiermittelzusammensetzung als Lösungsmittel (D) zwischen 70 und 90 Gewichtsprozent einer im Wesentlichen aus C7 bis C10-Alkanen bestehenden Kohlenwasserstofffraktion mit einem Siedebereich von 110 - 140°C oder einer im Wesentlichen aus C9 bis C12-Alkanen bestehenden Kohlenwasserstofffraktion mit einem Siedebereich von 150 - 180°C.

In einer anderen bevorzugten Ausführungsform enthält die Grundiermittelzusammensetzung als Lösungsmittel (D) zwischen 70 und 95 Gewichtsprozent eines aliphatischen Alkohols ausgewählt aus der Gruppe enthaltend Ethanol, i-Propanol, n-Butanol, i-Butanol oder sec-Butanol oder eine Mischung von zwei oder mehreren dieser Alkohole. Besonders bevorzugt sind 70 - 95 Gewichtsprozent sec-Butanol als Bestandteil (D) oder 70 - 95 Gewichtsprozent einer Mischung aus sec-Butanol und i-Propanol oder Ethanol, wobei vorzugsweise mindestens ein Fünftel dieser Mischung aus sec-Butanol bestehen.

Als Bestandteil (D) können auch Mischungen zwischen aliphatischen Kohlenwasserstoffen und Alkoholen verwendet werden, wobei solche Zusammensetzungen bevorzugt mindestens 30 Gewichtsprozent des Alkohols bezogen auf die Gesamtzusammensetzung enthalten.

Die erfindungsgemäßen Zusammensetzungen können in einer weiterhin bevorzugten Ausführungsform zusätzlich als Bestandteil (E) eine oder mehrere Organosiliciumverbindungen mit mindestens einer hydrolysierbaren Gruppe oder deren Teilhydrolysat enthalten, wobei die Organosiliciumverbindung ausgewählt wird aus der Gruppe der Verbindungen mit der allgemeinen durchschnittlichen Formel (V)

R⁵_{b}R⁶_{c}R⁷_{d}SiX_{4-b-c-d} (V)

worin
- R⁵: einen monovalenten, aliphatisch ungesättigten, substituierten oder unsubstituierten Kohlenwasserstoffrest mit 2 bis 18 Kohlenstoffatomen,
- R⁶: einen gegebenenfalls halogensubstituierten, monovalenten Kohlenwasserstoffrest mit 1 bis 18 Kohlenstoffatomen,
- R⁷: R⁵_{b}R⁶_{c}SiX_{3-b-c}-R⁸- oder YR⁸-Reste bedeuten,
- X: eine hydrolysierbare Gruppe ausgewählt aus den Gruppen -O₂CR⁶, -OR⁶, -NR⁶₂ , R⁶-C(=O)-N(R⁶)-, oder -O-N=CR⁶₂ ist,
- Y: ein einwertiger Rest, ausgewählt aus der Gruppe bestehend aus Anhydrid-, Aminoalkoxy-, Aminoalkyl-, N-Aminoalkylamino-, Acryloxy-, Methacryloxy-, Sulfon-, Sulfonat-, Phosphat-, Phosphonat-, Amino-, N-Alkylamino, Epoxy-, und Mercaptoresten ist,
- R⁸: einen zweiwertigen, gegebenenfalls substituierten Kohlenwasserstoffrest mit 1 bis 22 Kohlenstoffatomen, der Heteroatome, ausgewählt aus der Gruppe N, O, S enthalten kann, und
- b,c,d: 0, 1, 2 oder 3
bedeuten.

Beispiele für Rest R⁵ sind Alkenylreste wie Vinyl, Allyl oder höhere Alkenylreste.

Der Rest R⁶ hat hier die selbe Bedeutung wie der Rest R¹. Bevorzugte Beispiele für R⁶ sind einwertige Alkylreste, wie beispielsweise Methyl oder Ethyl.

Beispiele für Rest R⁷ sind Thiopropyl, 3-Glycidoxypropyl, 2-(3,4-Epoxycyclohexyl)ethyl-, Aminopropyl-, Aminoethylaminopropyl, Methacryloxypropyl-, Acryloxypropyl-, Methacryloxymethyl-, Acryloxymethyl-Reste sowie Trialkoxysilylalkylen-Reste, wie 2-Triethoxysilylethyl.

Beispiele für R⁸ sind zweiwertige Kohlenwasserstoffreste, wie Methylen-, Ethylen-, Propylen-, Butylen- oder höhere Alkylenreste wie -(CH₂)₈-, Phenylen- und Xylylenreste, und -CH₂CH(CH₃)-C₆H₄-CH(CH₃)CH₂-, -CH₂CH₂-C₆H₄-CH₂CH₂-, -C₆H₄-CR⁶₂-C₆H₄-, -C₃H₆O-C₆H₄-CR⁶₂-C₆H₄-OC₃H₆- und substituierte Reste, wie Hydroxykohlenwasserstoffreste und Etherreste, wie -CH₂O(CH₂)₃-, -CH₂CH₂-O-CH₂CH₂-, -CH₂CH₂-O-CH(CH₃) CH₂-, -CH₂-O-CH₂CH₂-O-CH₂-, -CH₂CH₂CH₂-O-CH₂CH₂CH₂- und -CH₂CH₂CH₂-OC(=O)O-CH₂CH₂CH₂-.

Beispiele für Bestandteil (E) sind Alkoxysilane, wie beispielsweise Vinyltrimethoxysilan, Vinyltriethoxysilan, Methylvinyldimethoxysilan, Dimethylvinylmethoxysilan, Vinyltris(methoxypropoxy)silan, Vinyltris(2-methoxyethoxy)silan, 3-(Methacryloxy)propyltrimethoxysilan, 3-(Methacryloxy)methyltrimethoxysilan, 3-(Methacryloxy)propyltriethoxysilan, 3-(Methacryloxy)methyltriethoxysilan, 3-(Methacryloxy)propylmethyldimethoxysilan, 3-(Methacryloxy)propyldimethylmethoxysilan, 3-(Acryloxy)propyltrimethoxysilan, 3-(Acryloxy)methyltrimethoxysilan, 3-(Acryloxy)propyltriethoxysilan, 3-(Acryloxy)methyltriethoxysilan, Allyltrimethoxysilan, Allyltriethoxysilan, Allyldiethoxysilan, Mercaptopropyltrimethoxysilane, Mercaptopropyltriethoxysilan, Mercaptopropylmethyldimethoxysilane, 3-Mercaptopropylmethyldiethoxysilan, 3-(2-Aminoethylamino)propyltrimethoxysilan, 3-(2-Aminoethylamino)propylmethyldimethoxysilan, 3-Cyclohexylaminopropyltrimethoxysilan, 3-Aminopropyltrimethoxysilan, 3-Aminopropyltriethoxysilan, 3-(Glycidoxy)propyltrimethoxysilan, 3-(Glycidoxy)propyltriethoxysilan, 3-(Glycidoxy)propylmethyldimethoxysilan, 2-(3,4-Epoxycyclohexyl)ethyltrimethoxysilan, 3-Isocyanatopropyltrimethoxysilan, 3-Isocyanatopropylmethyldimethoxysilan, 3-Isocyanatopropyltriethoxysilan, 3-Isocyanatopropylmethyldiethoxysilan, (Isocyanatomethyl)trimethoxysilan, (Isocyanatomethyl)methyldimethoxysilan, (Isocyanatomethyl)triethoxysilan, (Isocyanatomethyl)methyldiethoxysilan, (Aminomethyl)trimethoxysilan,(Aminomethyl)methyldimethoxysilan, (Anilinomethyl)trimethoxysilan, (Anilinomethyl)methyldimethoxysilan, (Anilinomethyl)triethoxysilan, (Hexylaminomethyl)trimethoxysilan, (Hexylaminomethyl)methyldimethoxysilan, 3-(Triethoxysilyl)propylbernsteinsäureanhydrid, 3-Cyanopropyltrimethoxysilan, Tetramethoxysilan, Tetraethoxysilan, Tetrapropoxysilan, Tetrabutoxysilan, Chlorpropyltrimethoxysilan, Chlormethyltrimethoxysilan, Chlormethyldimethoxysilan, Methyltrimethoxysilan, Methyltriethoxysilan, Isooctyltrimethoxysilan, Cyclohexylmethyldimethoxysilan, 1,2-Bis(methyldiethoxysilyl)ethan, 1,2-Bis(trimethoxysilyl)ethan, 1,2-Bis(triethoxysilyl)ethan, 1,6-Bis(trimethoxysilyl)hexan und 1,8-Bis(trimethoxysilyl)octan. Weitere Beispiele sind Aminosilane, Acyloxysilane und Aldoximo- und Ketoximosilane, wie beispielsweise Triacetoxy(vinyl)silan, Diacetoxy(methyl)(vinyl)silan, Tris(butylamino)vinylsilan und Tris(diethylamino)vinylsiloxan.

Bevorzugte Beispiele für Bestandteil (E) sind Vinyltrimethoxysilan, Vinyltriethoxysilan, 3-(Methacryloxy)propyltrimethoxysilan, 3-(Methacryloxy)methyltrimethoxysilan, 3-(Methacryloxy)methyltriethoxysilan, 3-(Acryloxy)propyltrimethoxysilan, 3-(Acryloxy)methyltrimethoxysilan, Allyltrimethoxysilan, 3-(Glycidoxy)propyltrimethoxysilan, 2-(3,4-Epoxycyclohexyl)ethyltrimethoxysilan, 1,2-Bis(trimethoxysilyl)ethan und 1,2-Bis(triethoxysilyl)ethan.

Noch bevorzugter sind Vinyltriethoxysilan, 3-(Methacryloxy)propyltrimethoxysilan, 3-(Methacryloxy)methyltrimethoxysilan, 3-(Glycidoxy)propyltrimethoxysilan und 1,2-Bis(triethoxysilyl)ethan.

Die erfindungsgemäßen Zusammensetzungen enthalten vorzugsweise zwischen 1 und 200 Gewichtsteile bezogen auf 100 Gewichtsteile Bestandteil (A) des Bestandteils (E), bevorzugt zwischen 5 und 150 Gewichtsteile und besonders bevorzugt zwischen 10 und 80 Gewichtsteile.

Optional kann die Zusammensetzung als weitere Bestandteile Metallverbindungen, wie beispielsweise Platin- oder Rhodiummetalle und/oder deren Verbindungen und Komplexe, zur Verbesserung der Anbindung des Kautschuks an die Grundierung durch Additionsreaktion von Si-H Gruppen mit aliphatisch ungesättigten Verbindungen enthalten. Derartige Verbindungen dienen als Härtungskatalysatoren. Vorzugsweise werden Platin und/oder dessen Verbindungen eingesetzt. Es können hier alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie beispielsweise Platinhalogenide, besonders bevorzugt PtCl₄, H₂PtCl₆ · 6H₂O, Na₂PtCl₄ · 4 H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆ · 6 H₂O und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen,.Bis-(gamma-picolin)-platindichlorid, Trimethylendipyridinplatindichlorid, Dicyclopentadienplatindichlorid, -Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe gemäß der Offenbarung der europäischen Patentschrift EP 0 110 370 B1**.**

Ein Beispiel ist der als Karstedt Katalysator bekannte Platin-1,3-Divinyl-1,1,3,3-tetramethyldisiloxan-Komplex, wie beispielsweise im Patent US 3,775,452 beschrieben.

Der Platinkatalysator wird vorzugsweise in Mengen von 0,05 bis 500 Gewichts-ppm (Gewichtsteilen je eine Million Gewichtsteilen), insbesondere 0,2 bis 400 Gewichts-ppm, jeweils berechnet als elementares Platin und bezogen auf das Gesamtgewicht der Bestandteile (A), (B), (C) und (E) eingesetzt.

Weiterhin kann die erfindungsgemäße Grundiermittelzusammensetzung in einer bevorzugten Ausführungsform Inhibitoren, die die Aktivität des Platinkatalysators regulieren, enthalten. Beispiele für Inhibitoren sind niedermolekulare Siliconöle mit MethylVinylSiO_{1/2}-Endgruppen, wie beispielsweise 1,3-Divinyl-1,1,3,3-tetramethyldisiloxan, Polymethylvinylcyclosiloxane, wie beispielsweise Methylvinylcyclotetrasiloxan, organische oder siliciumorganische Verbindungen mit einem Siedepunkt von mindestens 25°C bei 1012 mbar (abs.) und mindestens einer aliphatischen Dreifachbindung, wie beispielsweise 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, Alkylmaleate, wie beispielsweise Diallylmaleat und Dimethylmaleat, Alkylfumarate, wie beispieslweise Diethylfumarat und Diallylfumarat, eine Mischung aus Diallylmaleinat und Vinylacetat, Maleinsäuremonoester, Benzotriazol, Dialkylformamide, Alkylthioharnstoffe, organische Sulfoxide, organische Amine und Amide, Phosphine und Phosphite, Nitrile, Diaziridine und Oxime, wie beispielsweise Methylethylketoxim, Trialkylcyanurate, und Inhibitoren wie die Verbindung der Formel HC=C-C(CH₃)(OH)-CH₂-CH₂-CH=C'(CH₃)₂, käuflich erwerblich unter dem Handelsnamen "Dehydrolinalool" bei der Fa. BASF (Ludwigshafen/Deutschland).

Weiterhin kann die erfindungsgemäße Grundiermittelzusammensetzung H-Siloxane enthalten. H-Siloxane sind lineare, cyclische oder verzweigte Polyorganosiloxane, die Si-gebundene Wasserstoffatome aufweisen, und vorzugsweise aus Polyorganosiloxanen aus Einheiten der allgemeinen durchschnittlichen Formel (VI)

R¹ₑH_{f}SiO_{(4-e-f)/2} (VI),

worin
- R¹: die oben genannte Bedeutung hat, und
- e: 0, 1, 2 oder 3 sowie
- f: 0, 1 oder 2,
bedeuten, mit der Maßgabe, dass die Summe (e+f) < 3 ist und durchschnittlich mindestens 2 Si-gebundene Wasserstoffatome vorliegen,
bestehen.

Die H-Siloxane weisen dabei -(SiR¹₂O)- und -(SiR¹HO)- Einheiten auf, die in beliebiger Weise, beispielsweise als Block oder statistisch, im Organopolysiloxanmolekül verteilt sein können.

Beispiele für solche Organopolysiloxane sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Weiterhin können die erfindungsgemäßen Grundiermittelzusammensetzungen optional lineare oder verzweigte Polyorganosiloxane aufweisend aliphatischen Kohlenstoff-Kohlenstoff-Mehrfachbindungen der allgemeinen durchschnittlichen Formel (VII)

R¹_{g}R⁴ₕSiO_{(4-g-h)/2} (VII)

worin
- R⁴: einen einwertigen Kohlenwasserstoffrest mit terminaler, aliphatischer Kohlenstoff-Kohlenstoff-Mehrfachbindung mit 2 bis 8 Kohlenstoffatomen je Rest,
- g: 0, 1, 2 oder 3 und
- h: 0, 1 oder 2
bedeuten, mit der Maßgabe, dass die Summe (g+h) <3 ist und diese Polyorganosiloxane durchschnittlich mindestens 2 Reste R⁴ aufweisen, enthalten.

Die Polyorganosiloxane der allgemeinen durchschnittlichen Formel (VII) weisen dabei -(SiR¹₂O)- und - (SiR¹R⁴O) - Einheiten auf, die in beliebiger Weise, beispielsweise als Block oder statistisch, im Polyorganosiloxanmolekül verteilt sein können.

Weiterhin können organische und anorganische Peroxide enthalten sein, insbesondere organische Peroxide, wie beispielsweise Dialkylperoxide, Diacylperoxide, Aralkylperoxide, Perketale, Hydroperoxide oder gemischte Peroxide, wie beispielsweise Di-tert.-butylperoxid, tert.-Butylhydroperoxid, 2,5-Dimethyl-2,5-di(tert.-butylperoxy)hexan, Dicumylperoxid, Cumylhydroperoxid, tert-Butyl-cumylperoxid, Dibenzoylperoxid, Bis-(2,4-Dichlorbenzoyl)peroxid, Bis(4-methylbenzoyl)peroxid, 1,1-Di-tert.-butylperoxy-3,3,5-trimethylcyclohexan, Vinyl-tris(tert.-butylperoxy)silan.

Weiterhin können verstärkende und nicht-verstärkende Füllstoffe und Pigmente enthalten sein. Beispiele für verstärkende Füllstoffe, also Füllstoffe mit einer BET-Oberfläche von mindestens 50 m²/g, sind pyrogen hergestellte Kieselsäure, gefällte Kieselsäure oder Silicium-Aluminium-Mischoxide mit einer BET-Oberfläche von mehr als 50 m²/g. Die genannten Füllstoffe können hydrophobiert sein, beispielsweise durch Behandlung mit Organosilanen, -silazanen oder -siloxanen oder durch Veretherung von Hydroxylgruppen zu Alkoxygruppen. Bevorzugt sind pyrogen hergestellte Kieselsäuren mit einer BET-Oberfläche von mindestens 100 m²/g

Beispiele für nicht verstärkenden Füllstoffe, also Füllstoffe mit einer BET-Oberfläche von weniger als 50 m²/g, sind Pulver aus Quarz, Cristobalit, Diatomeenerde, Calciumsilikat, Zirkoniumsilikat, Montmorillonite, wie Bentonite, Zeolithe einschließlich der Molekularsiebe, wie Natriumaluminiumsilikat, Metalloxide, wie Aluminium- oder Zinkoxid bzw. deren Mischoxide, Metallhydroxide, wie Aluminiumhydroxid, Bariumsulfat, Calciumcarbonat, Gips, Siliciumnitrid, Siliciumcarbid, Bornitrid, Glas-, Kohle- und Kunststoffpulver und Glas- und Kunststoffhohlkugeln. Die BET-Oberfläche der nicht verstärkenden Füllstoffe beträgt vorzugsweise weniger als 20 m²/g.

Es kann eine Art von Füllstoff, es kann aber auch ein Gemisch von mindestens zwei Füllstoffen eingesetzt werden.
Beispiele für Hitzestabilisatoren oder Pigmente sind Ruß, Metallcarboxylate, wie beispielsweise Cer- oder Eisensalze von Carbonsäuren, wie beispielsweise Fettsäuren, Carbonsäuresalze von Eisen, Metalloxide oder Metallhydroxide, wie Titandioxid, Eisenoxid, Calciumhydroxid und gemischte Metalloxide von Spinelltyp.

Die Herstellung der erfindungsgemäßen Grundiermittelzusammensetzung kann nach bekannten Verfahren erfolgen, wie beispielsweise durch gleichmäßiges Lösen bzw. Vermischen der Komponenten (A), (B), (C), (E) und gegebenenfalls der weiteren optionalen Komponenten im Lösungsmittel (D) in einem geeigneten Mischaggregat, wie beispielsweise in einem Rührer oder Dissolver. Bevorzugt, aber nicht notwendigerweise, kann die Zusammensetzung nach dem gleichmäßigen Vermischen für eine halbe bis 4 Stunden auf 50 bis 100°C erwärmt werden, besonders bevorzugt für 1 bis 2 Stunden auf 60 bis 80°C, wodurch die Reaktion der Komponenten untereinander gefördert wird und ein stabileres Produkt resultiert. Vor der Verwendung kann die Grundiermittelzusammensetzung mit dem bei der Herstellung verwendeten oder einem anderen Lösungsmittel verdünnt werden, wenn beispielsweise dünnere Grundierungsfilme oder ein anderes Benetzungsverhalten gewünscht wird.

Mit der erfindungsgemäßen Grundiermittelzusammensetzung können Siliconkautschuke und -elastomere auf unterschiedlichsten Substraten zum Haften gebracht werden.

Gegenstand der Erfindung ist daher ein Verfahren zur Verbesserung der Haftung von Siliconkautschuk auf einem Substrat durch Auftragen der erfindungsgemäßen Grundiermittelzusammensetzung auf das Substrat, Ablüften- oder Einbrennen der Grundiermittelzusammensetzung, um einen gleichmäßigen, das Substrat überziehenden Grundiermittelfilm zu bilden, Auftragen einer vernetzbaren Siliconkautschukzusammensetzung auf das mit dem Grundiermittel überzogene Substrat, um einen Verbund zu erhalten, Aushärten des Verbundes, um einen Haftverbund eines Siliconkautschuks mit einem Substrat zu erhalten.

Beispiele für Substrate sind Metalle, wie beispielsweise Eisen, Nickel, Aluminium, Kupfer, Zink, Edelstahl, Messing, Bronze und deren Legierungen, sowie oberflächenbehandelte Metalle, wie beispielsweise verzinkter oder phosphatierter Stahl oder eloxiertes Aluminium, Kunststoffe, wie beispielsweise Naturkautschuk, Epoxy-, Polyester-, Polyamidharze, PVC und PBT, und anorganische Materialien, wie beispielsweise Glas, Glasfasern, Mörtel und Asbest.

Als vernetzbare Siliconkautschukzusammensetzung können alle gebräuchlichen und bisher bekannten peroxid-vernetzenden, additions-vernetzenden und kondensations-vernetzenden Siliconkautschukzusammensetzungen und Fluorsiliconkautschukzusammensetzungen eingesetzt werden. Es sind dies peroxid-vernetzende und additions-vernetzende, wie beispielsweise platin-vernetzende, HTV-Massen, LSR-Massen und additions-vernetzende, wie beispielsweise platin-vernetzende, und kondensations-vernetzende RTV-2-Massen, wobei die Grundiermittelzusammensetzung bevorzugt bei peroxid- und platin-vernetzenden HTV-Massen, LSR-Massen und platin-vernetzenden RTV-2-Massen eingesetzt wird und besonders bevorzugt bei additions-vernetzenden HTV-, LSR- und RTV-2-Massen. HTV-, LSR- und RTV-Massen sind dem Fachmann hinlänglich bekannt.

Die Herstellung des Haftverbunds geschieht nach dem Fachmann im Grunde bekannten Verfahren. Bevorzugt wird der Haftverbund hergestellt, indem das Substrat nach bekannten Methoden physikalisch-mechanisch oder chemisch gereinigt bzw. vorbehandelt wird, wie beispielsweise durch Sandstrahlen, Strahlen, Schleifen, Abdrehen, Ätzen, Phosphatieren, Chromatieren, Koronabehandlung, Flämmen, UV-Bestrahlung, und/oder entfettet wird, wie beispielsweise mit organischen Lösemitteln oder mit sauren, neutralen oder alkalischen wässrigen Reinigungsmitteln, und anschließend die Grundiermittelzusammensetzung nach bekannten Verfahren, wie beispielsweise Sprühen, Walzen, Pinseln, Rakeln und Tauchen, auf das Substrat aufgebracht wird.

Die auf das Substrat aufgebrachte Grundiermittelzusammensetzung wird vorzugsweise bei Temperaturen zwischen 0°C und 150°C für vorzugsweise 1 min bis 100 Stunden getrocknet. Die optimalen Bedingungen für das Trocknen sind auch abhängig von der Wahl des Lösungsmittels. In einer bevorzugten Ausführungsform wird bei Temperaturen zwischen 20°C und 50°C für 1 min bis 2 Stunden getrocknet. In einer anderen bevorzugten Ausführungsform wird bei Temperaturen zwischen 90°C und 150°C für 1 min bis 30 min getrocknet.

Für die Hydrolyse der aktiven Bestandteile der Zusammensetzung ist Feuchtigkeit nötig. Das Ablüften der auf das Substrat aufgebrachten Grundiermittelzusammensetzung geschieht bevorzugt bei einer relativen Luftfeuchtigkeit von 40 - 60 %, die gegebenenfalls durch Luftbefeuchter eingestellt werden kann. Werden die Substrate beispielsweise in Trockenschränken oder Trocknungskanälen abgelüftet, so kann auch dabei durch Einblasen entsprechend angefeuchteter Luft in die Trockenschränke die Luftfeuchtigkeit eingestellt werden. Bei zu geringer Luftfeuchtigkeit läuft die Hydrolyse nicht oder zu langsam ab. Es wird kein gut haftender Film erzeugt.

Anschließend wird der unvulkanisierte Siliconkautschuk auf das grundierte Substrat aufgebracht und vorzugsweise bei Temperaturen zwischen 80°C und 250°C, bevorzugt 130°C bis 200°C, für vorzugsweise 1 Sekunde bis 10 Stunden zu einem Verbundmaterial vernetzt. Hierbei können alle bisher bekannten Verfahren zum Aufbringen von Siliconmassen auf Substrate verwendet werden, wie beispielsweise Spritzgießen, Extrudieren, Press-moulding, Compression-Moulding, Transfer-Moulding und allgemein Pressen. Anschließend kann der Haftverbund bei Bedarf bei Temperaturen oberhalb von Raumtemperatur für einige Zeit getempert werden. Die Bedingungen sind abhängig vom verwendeten Substrat und der Art des Siliconkautschuks. Bei RTV-2 Kautschuken kann auch drucklos bei Raumtemperatur vernetzt werden. Für Metalle wird das grundierte Substrat vorzugsweise mit dem unvulkanisierten Siliconkautschuk für vorzugsweise 30 Sekunden bis 20 min, bevorzugt 1 bis 10 min, bei einer Temperatur von vorzugsweise 160°C bis 200°C unter Druck vulkanisiert und gegebenenfalls anschließend für vorzugsweise 2 bis 6 Stunden, bevorzugt 4 Stunden, bei 200°C getempert. Der Druck kann dabei innerhalb weiter Grenzen variieren und zwar von Umgebungsdruck bis hin zu sehr hohen Drücken. Die Haftung kann häufig durch höhere Vernetzungstemperaturen und längere Vernetzungszeiten verbessert werden. Das grundierte Substrat kann bis zu 2 Monate lagern, bevor es mit dem Siliconkautschuk, nach dem beschriebenen Verfahren, verklebt wird.

Die erfindungsgemäße Grundiermittelzusammensetzung kann insbesondere überall dort mit Vorteil eingesetzt werden, wo eine gute Haftfestigkeit zwischen einem peroxid-vernetzenden oder additions-vernetzenden Siliconelastomer und einem Substrat, vorzugsweise bestehend aus organischen Kunststoffen, Metallen oder Gläsern, erwünscht wird. Das Substrat kann als Formteil, Folie oder Beschichtung vorliegen.

Die Grundiermittelzusammensetzung eignet sich zur Herstellung von Verbundmaterialien durch Beschichten, Verkleben, Vergießen und zur Herstellung von Formartikeln. Insbesondere eignen sich die Grundiermittelzusammensetzungen zum Verguss und zum Verkleben elektrischer und elektronischer Teile sowie zur Herstellung von Verbundformteilen. Unter Verbundformteilen wird hier ein einheitlicher Formartikel aus einem Verbundmaterial verstanden, der aus einem aus den Siliconzusammensetzungen hergestelltem Siliconelastomerteil und mindestens einem Substrat so zusammengesetzt ist, dass zwischen beiden Teilen eine feste, dauerhafte Verbindung besteht. Verbundmaterialien und insbesondere Verbundformteile können in vielfältigsten Anwendungsbereichen zum Einsatz kommen, beispielsweise in der Elektronik-, Haushaltsgeräte-, Gebrauchsgüter-, Bau- und Automobilindustrie, in der Medizintechnik und in der Sport- und Freizeitartikelherstellung.

### Beispiele

**Kautschuk 1**: Kautschuk 1 ist ein einkomponentiger, additionsvernetzender HTV-Siliconkautschuk, erhältlich von der Fa. Wacker Chemie GmbH, München/Deutschland, unter dem Namen EL R 4001/60.
**Kautschuk 2**: Kautschuk 2 ist ein additionsvernetzender LSR-Siliconkautschuk, erhältlich von der Fa. Wacker Chemie GmbH, München/Deutschland, unter dem Namen EL LR 3003/40.
**Kautschuk 3**: Kautschuk 3 ist ein additionsvernetzender RTV-2 Siliconkautschuk, erhältlich von der Fa. Wacker Chemie GmbH, München/Deutschland, unter dem Namen EL RT 623.

**Teilhydrolysat 1:** Teilhydrolysat 1 ist ein Tetraethoxysilan-Teilhydrolysat, das laut ²⁹Si NMR Analyse folgende Zusammensetzung hat: 24 mol-% Q0 Einheiten, 52 mol-% Q1 Einheiten, 21 mol-% Q2 Einheiten und 3 mol-% Q3 Einheiten.

**Teilhydrolysat 2:** Teilhydrolysat 2 ist ein Tetraethoxysilan-Teilhydrolysat, das laut ²⁹Si NMR Analyse folgende Zusammensetzung hat: 8 mol-% Q0 Einheiten, 32 mol-% Q1 Einheiten, 45 mol-% Q2 Einheiten und 15 mol-% Q3 Einheiten.

**Teilhydrolysat 3**: Teilhydrolysat 3 ist ein Tetraethoxysilan-Teilhydrolysat, das laut ²⁹Si NMR Analyse folgende Zusammensetzung hat: 4 mol-% Q0 Einheiten, 14 mol-% Q1 Einheiten, 36 mol-% Q2 Einheiten, 42 mol-% Q3 Einheiten und 4 mol-% Q4 Einheiten.

**Siliconharz 1:** Siliconharz 1 ist ein toluol-lösliches vinylhaltiges MQ-Siliconharz mit 55 mol-% Q-Einheiten, 45 mol-% M-Einheiten und einem Q/Si-OEt Verhältnis von 8.

**Siliconharz 2:** Siliconharz 2 ist ein toluol-lösliches vinylfreies MQ-Siliconharz mit 60 mol-% Q-Einheiten, 40 mol-% M-Einheiten und einem Q/Si-OEt Verhältnis von 8.

### Beispiel 1:

10.5 g Teilhydrolysat 1, 9.8 g Tetrabutyltitanat und 9.0 g Siliconharz 1 werden in 120 g einer Kohlenwasserstofffraktion mit einem Siedebereich von 110 - 140°C gelöst und eine Stunde bei Raumtemperatur gerührt.

### Beispiel 2 (nicht erfindungsgemäß):

10.5 g Teilhydrolysat 1 und 9.8 g Tetrabutyltitanat werden in 125 g einer Kohlenwasserstofffraktion mit einem Siedebereich von 110 - 140°C gelöst und eine Stunde bei Raumtemperatur gerührt.

### Beispiel 3:

10.5 g Teilhydrolysat 1, 9.8 g Tetrabutyltitanat, 9.0 g Siliconharz 1 und 4.5 g Vinyltriethoxysilan werden in 115 g einer Kohlenwasserstofffraktion mit einem Siedebereich von 110 - 140°C gelöst und eine Stunde bei Raumtemperatur gerührt.

### Beispiel 4 (nicht erfindungsgemäß):

10.5 g Teilhydrolysat 1, 9.8 g Tetrabutyltitanat, 9.0 g Siliconharz 1 und 15.0 g Vinyltriethoxysilan werden in 115 g einer Kohlenwasserstofffraktion mit einem Siedebereich von 110 - 140°C gelöst und eine Stunde bei Raumtemperatur gerührt.

### Beispiel 5:

10.5 g Teilhydrolysat 1, 9.8 g Tetrabutyltitanat, 9.0 g Siliconharz 1 und 4.5 g Methacryloxypropyltrimethoxysilan werden in 115 g einer Kohlenwasserstofffraktion mit einem Siedebereich von 110 - 140°C gelöst und eine Stunde bei Raumtemperatur gerührt.

### Beispiel 6 (nicht erfindungsgemäß):

12.0 g Tetraethoxysilan, 9.8 g Tetrabutyltitanat, 9.0 g Siliconharz 1 und 4.5 g Methacryloxypropyltrimethoxysilan werden in 115 g einer Kohlenwasserstofffraktion mit einem Siedebereich von 110 - 140°C gelöst und eine Stunde bei Raumtemperatur gerührt.

### Beispiel 7 (nicht erfindungsgemäß):

9.0 g Teilhydrolysat 2, 9.8 g Tetrabutyltitanat, 9.0 g Siliconharz 1 und 4.5 g Methacryloxypropyltrimethoxysilan werden in 115 g einer Kohlenwasserstofffraktion mit einem Siedebereich von 110 - 140°C gelöst und eine Stunde bei Raumtemperatur gerührt.

### Beispiel 8 (nicht erfindungsgemäß):

7.5 g Teilhydrolysat 3, 9.8 g Tetrabutyltitanat, 9.0 g Siliconharz 1 und 4.5 g Methacryloxypropyltrimethoxysilan werden in 115 g einer Kohlenwasserstofffraktion mit einem Siedebereich von 110 - 140°C gelöst und eine Stunde bei Raumtemperatur gerührt.

### Beispiel 9 (nicht erfindungsgemäß):

10.5 g Teilhydrolysat 1, 9.8 g Tetrabutyltitanat, 9.0 g Siliconharz 1 und 15.0 g Methacryloxypropyltrimethoxysilan werden in 115 g einer Kohlenwasserstofffraktion mit einem Siedebereich von 110 - 140°C gelöst und eine Stunde bei Raumtemperatur gerührt.

### Beispiel 10 (nicht erfindungsgemäß):

5.0 g Tetraethoxysilan, 2.0 g Teilhydrolysat 2, 3.0 g Tetrabutyltitanat, 3.5 g Siliconharz 1 und 5.0 g Vinyltriethoxysilan werden in 80 g einer Kohlenwasserstofffraktion mit einem Siedebereich von 110 - 140°C gelöst und eine Stunde bei Raumtemperatur gerührt.

### Beispiel 11:

10.5 g Teilhydrolysat 1, 9.8 g Tetrabutyltitanat, 9.0 g Siliconharz 1, 1.0 g Vinyltriethoxysilan und 3.0 g Methacryloxypropyltrimethoxysilan werden in 115 g einer Kohlenwasserstofffraktion mit einem Siedebereich von 110 - 140°C gelöst und eine Stunde bei Raumtemperatur gerührt.

### Beispiel 12:

10.5 g Teilhydrolysat 1, 9.8 g Tetrabutyltitanat, 9.0 g Siliconharz 1 und 4.0 g 1,2-Bis-triethoxysilylethan werden in 115 g einer Kohlenwasserstofffraktion mit einem Siedebereich von 110 - 140°C gelöst und eine Stunde bei Raumtemperatur gerührt.

### Beispiel 13:

10.5 g Teilhydrolysat 1, 9.8 g Tetrabutyltitanat, 9.0 g Siliconharz 1 und 4.5 g 1,2-Bis-triethoxysilyloctan werden in 115 g einer Kohlenwasserstofffraktion mit einem Siedebereich von 110 - 140°C gelöst und eine Stunde bei Raumtemperatur gerührt.

### Beispiel 14:

23.0 g Teilhydrolysat 1, 19.5 g Tetrabutyltitanat, 17.0 g Siliconharz 1 und 8.5 g 1,2-Bis-triethoxysilylethan werden in 230 g p-Xylol gelöst und eine Stunde bei Raumtemperatur gerührt.

### Beispiel 15:

18.5 g Teilhydrolysat 1, 23.5 g Tetrabutyltitanat, 17.0 g Siliconharz 1 und 5.0 g Methacryloxypropyltrimethoxysilan werden in 230 g einer Kohlenwasserstofffraktion mit einem Siedebereich von 150 - 180°C gelöst und eine Stunde bei Raumtemperatur gerührt. Die Grundierung wird nach dem Auftragen 20 min bei 140°C abgelüftet.

### Beispiel 16:

25.5 g Teilhydrolysat 1, 24.5 g Tetrabutyltitanat, 15.8 g Siliconharz 1 und 9.0 g 1,2-Bis-triethoxysilylethan werden in 305 g sec.-Butanol gelöst und eine Stunde bei 70°C gerührt. Die Grundierung wird nach dem Auftragen 20 min bei 100°C abgelüftet.

100 g der Grundierung aus Beispiel 16 werden mit 200 g sec.-Butanol verdünnt. Die verdünnte Grundierung wird auf ein Aluminiumsubstrat aufgetragen. Die Benetzung ist nicht vollständig. 100 g der Grundierung aus Beispiel 13 werden mit 200 g iso-Propanol verdünnt. Die verdünnte Grundierung wird auf ein Aluminiumsubstrat aufgetragen. Es zeigen sich keine Benetzungsprobleme.

### Beispiel 17:

25.0 g Teilhydrolysat 1, 38.9 g Tetrabutyltitanat, 20.0 g Siliconharz 1 und 7.0 g Methacryloxypropyltrimethoxysilan werden in 390 g sec.-Butanol gelöst und eine Stunde bei 70°C gerührt. Die Grundierung wird nach dem Auftragen 20 min bei 100°C abgelüftet.

### Beispiel 18 (nicht erfindungsgemäß):

26.5 g Teilhydrolysat 1, 27.5 g Tetrabutyltitanat, 7.0 g Siliconharz 1 und 10.0 g 1,2-Bis-triethoxysilylethan werden in 330 g einer Kohlenwasserstofffraktion mit einem Siedebereich von 110 - 140°C gelöst.

### Beispiel 19:

26.5 g Teilhydrolysat 1, 27.5 g Tetrabutyltitanat, 10.5 g Siliconharz 1 und 10.0 g 1,2-Bis-triethoxysilylethan werden in 330 g einer Kohlenwasserstofffraktion mit einem Siedebereich von 110 - 140°C gelöst.

### Beispiel 20:

26.5 g Teilhydrolysat 1, 27.5 g Tetrabutyltitanat, 18.5 g Siliconharz 1 und 10.0 g 1,2-Bis-triethoxysilylethan werden in 330 g einer Kohlenwasserstofffraktion mit einem Siedebereich von 110 - 140°C gelöst.

### Beispiel 21:

26.5 g Teilhydrolysat 1, 27.5 g Tetrabutyltitanat, 28.0 g Siliconharz 1 und 10.0 g 1,2-Bis-triethoxysilylethan werden in 330 g einer Kohlenwasserstofffraktion mit einem Siedebereich von 110 - 140°C gelöst.

### Beispiel 22 (nicht erfindungsgemäß):

26.5 g Teilhydrolysat 1, 27.5 g Tetrabutyltitanat, 34.0 g Siliconharz 1 und 10.0 g 1,2-Bis-triethoxysilylethan werden in 330 g einer Kohlenwasserstofffraktion mit einem Siedebereich von 110 - 140°C gelöst.

### Beispiel 23:

7.0 g Teilhydrolysat 1, 9.5 g Tetrabutyltitanat, 6.5 g Siliconharz 1 und 1.5 g Glycidoxypropyltrimethoxysilan werden in 105 g einer Kohlenwasserstofffraktion mit einem Siedebereich von 110 - 140°C gelöst und eine Stunde bei Raumtemperatur gerührt.

### Beispiel 24:

23.0 g Teilhydrolysat 1, 29.5 g Tetrabutyltitanat, 20.5 g Siliconharz 1 und 7.0 g Methacryloxypropyltrimethoxysilan werden in 330 g einer Kohlenwasserstofffraktion mit einem Siedebereich von 110 - 140°C gelöst.

### Beispiel 25:

16.3 g Teilhydrolysat 1, 9.0 g Tetramethyltitanat, 12.0 g Siliconharz 1 und 7.0 g 1,2-Bis-triethoxysilylethan werden in 250 g einer Kohlenwasserstofffraktion mit einem Siedebereich von 110 - 140°C gelöst und eine Stunde bei 70°C gerührt.

### Beispiel 26:

14.0 g Teilhydrolysat 1, 20.0 g Tetrabutyltitanat, 12.0 g Siliconharz 1 und 4.0 g Methacryloxymethyltrimethoxysilan werden in 250 g einer Kohlenwasserstofffraktion mit einem Siedebereich von 110 - 140°C gelöst und eine Stunde bei 70°C gerührt.

### Beispiel 27:

16.0 g Teilhydrolysat 1, 22.0 g Tetraethyltitanat, 12.0 g Siliconharz 1 und 4.0 g Methacryloxymethyltrimethoxysilan werden in einer Mischung aus 230 g einer Kohlenwasserstofffraktion mit einem Siedebereich von 110 - 140°C und 20 g Methanol gelöst und eine Stunde bei 70°C gerührt.

### Beispiel 28:

10.0 g der Grundierung aus Beispiel 25 werden mit 50.0 g einer Kohlenwasserstofffraktion mit einem Siedebereich von 110 - 140°C verdünnt.

### Beispiel 29 (nicht erfindungsgemäß):

13.0 g Teilhydrolysat 1, 22.0 g Tetrabutyltitanat und 11.0 g Methacryloxymethyltrimethoxysilan werden in 250 g einer Kohlenwasserstofffraktion mit einem Siedebereich von 110 - 140°C gelöst und eine Stunde bei 70°C gerührt.

### Beispiel 30:

16.0 g Teilhydrolysat 1, 29.0 g Tetrabutyltitanat, 10.0 g Siliconharz 1, 4.0 g Methacryloxymethyltrimethoxysilan und 30 mg einer Lösung eines 1,3-Divinyl-1,1,3,3-tetramethyl-disiloxan-Platin-Komplexes in Toluol, die einen Pt-Gehalt von 1 Gew.-% aufweist, werden in einer Mischung aus 180 g einer Kohlenwasserstofffraktion mit einem Siedebereich von 110 - 140°C und 20 g Methanol gelöst und eine Stunde bei 70°C gerührt.

### Beispiel 31:

25.5 g Teilhydrolysat 1, 24.5 g Tetrabutyltitanat, 15.8 g Siliconharz 2 und 9.0 g 1,2-Bis-triethoxysilylethan werden in 305 g sec.-Butanol gelöst und eine Stunde bei 70°C gerührt. Die Grundierung wird nach dem Auftragen 20 min bei 100°C abgelüftet.

### Charakterisierung der Haftung

Die verwendeten Substrate hatten eine Größe von B × L × D = 25 mm × 60 mm × 3 mm oder 25 mm × 60 mm × 2 mm. Stahlsubstrate wurden sandgestrahlt und dann mit Aceton entfettet, die anderen Substrate wurden nur mit Aceton, Ethanol oder Toluol entfettet. Anschließend wurde das Substrat mit der zu testenden Grundierung bestrichen und mit einem Rakel auf vergleichbare Schichtdicke gebracht. Die so grundierten Plättchen wurden, wenn nicht anders angegeben eine Stunde an Luft gelagert bevor sie in eine Edelstahlpressform eingelegt und die Form mit der angegebenen Siliconelastomermasse gefüllt wurde. Ähnliche Werte wurden mit anderen additionsvernetzenden Siliconmassen (HTV- und LSR-Massen) erhalten. Bei den Beispielen 25 - 30 wurden die Grundierungen durch Tauchen der Substrate aufgebracht, die Grundierung 5 min bei 160°C eingebrannt und wie oben angegeben weiter verfahren. Bei Beispiel 31 wurde die Grundierung mit einem Pinsel aufgetragen und das grundierte Substrat eine Stunde bei Raumtemperatur gelagert. In einer Form wurde dann der Kautschuk aufgebracht und drucklos 24 Stunden bei Raumtemperatur ausgehärtet.

Die Pressvulkanisation erfolgte während 15 min bei einer Temperatur von 165°C und einer Druckkraft von 30 to.

Abschließend wurden die Haftverbunde mit Metallsubstraten im Umlufttrockenschrank bei 200°C für 4 Stunden getempert.
Nach Entnahme des Haftverbunds wurde der starre Substratkörper fest eingespannt und die maximale Trennkraft bestimmt, die notwendig ist, um den anhaftenden Siliconelastomerstreifen im Schälversuch abzulösen. Die Bestimmung der Trennkraft erfolgte gemäß DIN 53531 (mit folgenden Besonderheiten: die Dicke der Trägerplatte betrug 3 bzw. 2 mm und die Dicke des Elastomers über der Trägerplatte betrug 5 mm) und wird in N/mm angegeben. Je Beispiel wurden 5 Haftverbunde gemessen, die Trennkraft als Mittelwert bestimmt und das Rissbild beurteilt (kohäsives oder adhäsives Versagen; bei einigen Versuchen, in denen keine Trennkräfte ermittelt wurden, wird der Anteil an kohäsivem Versagen in Prozent angegeben). Kohäsives Versagen von 0% bedeutet, dass das Siliconelastomer vollständig und rückstandsfrei von der Substratoberfläche abgelöst wurde. Kohäsives Versagen von 100% bedeutet, dass die Delaminierung ausschließlich durch Risswachstum innerhalb des Siliconelastomers erfolgte.

Die Haftung der erfindungsgemäßen sowie nicht erfindungsgemäßen Grundierungsmittelzusammensetzungen wurden auf folgenden Substraten getestet:
- I.: Stahl St 37
- II.: Aluminium (Industriequalität)
- III.: galvanisch verzinktes Stahlblech
- IV.: Glasfaserverstärkte Epoxyplättchen (GfK)
- V.: Polybutylenterephthalat (PBT): Ultradur® B4300G6 (BASF AG; 30% GF)
- VI.: Polyamid 6: Durethan® BKV30 (Bayer AG; 30%GF)
- VII.: Polyamid 6.6: Ultramid® A3WG6 (BASF AG; 30%GF)

Die Ergebnisse sind in den Tabellen 1 und 2 zusammengefasst. Nach dem Wert für die Trennkraft ist in Klammern angegeben, ob der Verbund überwiegend durch Kohäsionsriss (KR) oder Adhäsionsriss (AR) versagt. Bei Einträgen "k.H." (keine Haftung) versagte der Verbund ohne messbare Trennkraft; "n.b." steht für nicht bestimmt. Bei Versuchen, in denen keine Trennkraft bestimmt wurde, wird der ungefähre Anteil des Kohäsionsbruch in Prozent angegeben.

**Tabelle 1: Haftung mit Kautschuk 1 (HTV) zu Metallsubstraten.**

| Grundierung aus Beispiel | Film nach Ablüften | Trennkraft [N/mm] | | |
|---|---|---|---|---|
| | | Stahl St 37 | Aluminium | phosphatierter Stahl |
| | | | | |
| 1 | gleichmäßig | 4.0 (KR) | 8.2 (KR) | |
| 2* | gleichmäßig | k. H. | 1.5 (AR) | |
| 3 | gleichmäßig | 7.3 (KR) | 8.5 (KR) | |
| 4* | unregelmäßig | 3.5 (AR) | 4.2 (AR) | |
| 5 | weitgehend gleichmäßig | 9.2 (KR) | 7.2 (KR) | |
| 6* | ungleichmäßig, trübe | n.b. | 2.9 (AR) | |
| 7* | ungleichmäßig | n.b. | 3.4 (AR) | |
| 8* | ungleichmäßig | n.b. | 1.8 (AR) | |
| 9* | trübe | 4.5 (teilw. AR) | 3.3 (AR) | |
| 10* | spröde | k. H. | 1.1 (AR) | |
| 11 | gleichmäßig | 7.5 (KR) | 9.9 (KR) | |
| 12 | gleichmäßig | 10.2 (KR) | 10.3 (KR) | |
| 13 | gleichmäßig | 7.9 (KR) | 10.6(KR) | |
| 14 | keine vollständige Benetzung | 3.0 (AR) | 2.9 (AR) | 7.8 (KR) |
| 15 | leicht trüb | 7.2 (KR) | 7.9 (KR) | |
| 16 | gleichmäßig | 10.7 (KR) | 8.3 (KR) | |
| 17 | gleichmäßig, leicht trübe | 6.5 (KR) | 11.3(KR) | |
| 18* | gleichmäßig | 2.4 (AR) | 2.3 (AR) | |
| 19 | gleichmäßig | 6.8 (KR) | 7.3 (KR) | |
| 20 | gleichmäßig | 10.7 (KR) | 9.9 (KR) | |
| 21 | gleichmäßig | 5.1 (KR) | 8.4 (KR) | |
| 22* | gleichmäßig | 1.4 (AR) | 2.9 (AR) | |
| 23 | gleichmäßig, leicht trüb | 8.2 (KR) | 10.6 (KR) | |
| 24 | gleichmäßig | 9.4 (KR) | 10.4 (KR) | |

| | | | | |
|---|---|---|---|---|
| * nicht erfindungsgemäß | | | | |

**Tabelle 2: Haftung mit Kautschuk 2 und 3 zu Substraten.**

| Grundierung aus Beispiel | Film nach Ablüften | Trennkraft [N/mm] | | | | | | |
|---|---|---|---|---|---|---|---|---|
| | | St 37 | Al | verzinktes Stahlblech | Epoxy GfK | PBT | PA 6 | PA 6.6 |
| 20 | gleich mäßig | 6.0 (KR) | 11.4 (KR) | | 12.0 | 9.2 | 11.7 | 11.9 |
| 24 | gleich mäßig | 2.4 (AR) | 8.7 (KR) | | 11.7 | 9.0 | 7.1 | 11.1 |
| 25 | gleich mäßig, leicht trüb | | | 100 % KR | | | | |
| 26 | gleich mäßig | | | 100 % KR | | | | |
| 27 | gleich mäßig | | | 100 % KR | | | | |
| 28 | gleich mäßig | | | 95 % KR | | | | |
| 29* | gleich mäßig | | | 0 % KR | | | | |
| 30 | gleich mäßig | | | 100 % KR | | | | |
| 31 | gleich mäßig | | 100 % KR | | | | | |

| | | | | | | | | |
|---|---|---|---|---|---|---|---|---|
| * nicht erfindungsgemäß | | | | | | | | |

## Patentansprüche

1. Grundiermittelzusammensetzung enthaltend
(A) 100 Gewichtsteile mindestens eines Teilhydrolysats eines Tetraalkoxysilans oder Mischungen -mindestens eines Tetraalkoxysilans mit seinem Teilhydrolysat,
(B) 25 - 400 Gewichtsteile bezogen auf 100 Gewichtsteile Bestandteil (A) einer Verbindung ausgewählt aus der Gruppe enthaltend Metallsalze, Metallalkoxide, Metallchelate, deren Teilhydrolysate und deren Gemische,
(C) 25 - 125 Gewichtsteile bezogen auf 100 Gewichtsteile Bestandteil (A) Siliconharz, und
(D) Lösungsmittel ausgewählt aus der Gruppe enthaltend organische Lösungsmittel, niedermolekulare cyclische und lineare Polyorganosiliconverbindungen sowie deren Gemische, mit der Maßgabe, dass der Anteil des Lösungsmittels an der Gesamtzusammensetzung 50 - 95 Gew.-% beträgt,
**dadurch gekennzeichnet, dass** der Bestandteil (A)
0 - 45 mol-% Q0 Einheiten,
30 - 80 mol-% Q1 Einheiten,
5 - 50 mol-% Q2 Einheiten,
0 - 20 mol-% Q3 Einheiten
enthält, worin der Rest zu 100 mol-% durch Q4 gebildet wird und Q0 Einheiten Si(OR¹)₄, Q1 Einheiten (R¹O)₃SiO_{1/2}, Q2 Einheiten (R¹O)₂SiO_{2/2} , Q3 Einheiten (R¹O)₁SiO_{3/2} und Q4 Einheiten SiO_{4/2} sowie R¹ unabhängig von einander einen einwertigen, substituierten oder unsubstituierten Kohlenwasserstoffrest bedeuten.

2. Grundiermittelzusammensetzungen gemäß Anspruch 1
**dadurch gekennzeichnet, dass** die Grundiermittelzusammensetzung zusätzlich
(E) eine oder mehrere Organosiliciumverbindungen mit mindestens einer hydrolysierbaren Gruppe oder deren Teilhydrolysat enthält, wobei die Organosiliciumverbindung ausgewählt wird aus der Gruppe der Verbindungen mit der allgemeinen durchschnittlichen Formel (V)
R⁵_{b}R⁶_{c}R⁷_{d}SiX_{4-b-c-d} (V)
worin
R⁵ einen monovalenten, aliphatisch ungesättigten, substituierten oder unsubstituierten Kohlenwasserstoffrest mit 2 bis 18 Kohlenstoffatomen,
R⁶ einen gegebenenfalls halogensubstituierten, monovalenten Kohlenwasserstoffrest mit 1 bis 18 Kohlenstoffatomen,
R⁷ R⁵_{b}R⁶_{c}SiX_{3-b-c}-R⁸- oder YR⁸ -Reste bedeuten,
X eine hydrolysierbare Gruppe ausgewählt aus den Gruppen -O₂CR⁶, -OR⁶, -NR⁶₂, R⁶-C(=O)-N(R⁶)-, oder -O-N=CR⁶₂ ist,
Y ein einwertiger Rest, ausgewählt aus der Gruppe bestehend aus Anhydrid-, Aminoalkoxy-, Aminoalkyl-, N-Aminoalkylamino-, Acryloxy-, Methacryloxy-, Sulfon-, Sulfonat-, Phosphat-, Phosphonat-, Amino-, N-Alkylamino, Epoxy-, und Mercaptoresten ist,
R⁸ einen zweiwertigen, gegebenenfalls substituierten Kohlenwasserstoffrest mit 1 bis 22 Kohlenstoffatomen, der Heteroatome, ausgewählt aus der Gruppe N, O, S enthalten kann, und
b,c,d 0, 1, 2 oder 3
bedeuten.

3. Grundiermittelzusammensetzungen gemäß einem der Ansprüche 1 oder 2, **dadurch gekennzeichnet, dass** der Bestandteil (E) ausgewählt wird aus der Gruppe enthaltend 3-(Methacryloxy)propyltrimethoxysilan, 3-(Methacryloxy)methyltrimethoxysilan, 3-(Glycidoxy)propyltrimethoxysilan und 1,2-Bis(triethoxysilyl)ethan.

4. Grundiermittelzusammensetzungen gemäß einem der Ansprüche 1 bis 3, **dadurch gekennzeichnet, dass** das Lösungsmittel sec.-Butanol oder ein Gemisch enthaltend sec.-Butanol ist.

5. Grundiermittelzusammensetzungen gemäß einem der Ansprüche 1 bis 3, **dadurch gekennzeichnet, dass** die Grundiermittelzusammensetzung als Lösungsmittel (D) zwischen 70 und 90 Gew.-% einer im Wesentlichen aus C7 bis C10-Alkanen bestehenden Kohlenwasserstofffraktion mit einem Siedebereich von 110 - 140°C oder einer im Wesentlichen aus C9 bis C12-Alkanen bestehenden Kohlenwasserstofffraktion mit einem Siedebereich von 150 - 180°C enthält.

6. Grundiermittelzusammensetzungen gemäß einem der Ansprüche 1 bis 4, **dadurch gekennzeichnet, dass** die Grundiermittelzusammensetzung als Lösungsmittel (D) zwischen 70 und 95 Gewichtsprozent eines aliphatischen Alkohols ausgewählt aus der Gruppe enthaltend Ethanol, i-Propanol, n-Butanol, i-Butanol oder sec-Butanol oder eine Mischung von zwei oder mehreren dieser Alkohole enthält.

7. Verfahren zur Herstellung einer Grundiermittelzusammensetzung gemäß einem der Ansprüche 1 bis 6 durch gleichmäßiges Lösen bzw. Vermischen der Komponenten (A), (B), (C), (E) und gegebenenfalls weitere optionale Komponenten im Lösungsmittel (D) in einem Mischaggregat.

8. Verfahren gemäß Anspruch 7, **dadurch gekennzeichnet, dass** die Zusammensetzung nach dem gleichmäßigen Vermischen bzw. Lösen für eine halbe bis 4 Stunden auf 50 bis 100°C erhitzt wird.

9. Verfahren nach Anspruch 7 oder 8, **dadurch gekennzeichnet, dass** die Grundiermittelzusammensetzung mit einem Lösungsmittel verdünnt wird.

10. Verfahren zur Verbesserung der Haftung von Siliconkautschuk auf einem Substrat durch Auftragen einer Grundiermittelzusammensetzung gemäß einem der Ansprüche 1 bis 7 auf das Substrat, Ablüften- oder Einbrennen der Grundiermittelzusammensetzung, um einen gleichmäßigen, das Substrat überziehenden Grundiermittelfilm zu bilden, Auftragen einer vernetzbaren Siliconkautschukzusammensetzung auf das mit dem Grundiermittel überzogene Substrat, um einen Verbund zu erhalten, Aushärten des Verbundes, um einen Haftverbund eines Siliconkautschuks mit einem Substrat zu erhalten.

11. Verfahren nach Anspruch 10, **dadurch gekennzeichnet, dass** das Substrat ein Metall ausgewählt aus der Gruppe enthaltend Eisen, Nickel, Aluminium, Kupfer, Zink, Edelstahl, Messing, Bronze und deren Legierungen, sowie oberflächenbehandeltes Metall ausgewählt aus der Gruppe enthaltend verzinkter oder phosphatierter Stahl und eloxiertes Aluminium, ein Kunststoff ausgewählt aus der Gruppe enthaltend Naturkautschuk, Epoxy-, Polyester-, Polyamidharze, PVC und PBT, oder ein anorganisches Material ausgewählt aus der Gruppe enthaltend Glas, Glasfasern, Mörtel und Asbest ist.

12. Verfahren nach Anspruch 10 oder 11, **dadurch gekennzeichnet, dass** die auf das Substrat aufgebrachte Grundiermittelzusammensetzung bei Temperaturen zwischen 0°C und 150°C für 1 min bis 100 Stunden getrocknet wird.

13. Verwendung einer Grundiermittelzusammensetzung gemäß einem der Ansprüche 1 bis 7 zur Herstellung von Verbundmaterialien durch Beschichten, Verkleben, Vergießen und zur Herstellung von Formartikeln.

## Claims

1. Primer composition containing,
(A) 100 parts by weight of at least one partial hydrolysis product of a tetraalkoxysilane or mixtures of at least one tetraalkoxysilane with its partial hydrolysis product,
(B) 25 - 400 parts by weight, based on 100 parts by weight of component (A), of a compound selected from the group consisting of metal salts, metal alkoxides, metal chelates, the partial hydrolysis products thereof and mixtures thereof,
(C) 25 - 125 parts by weight, based on 100 parts by weight of component (A), of silicone resin and
(D) solvent selected from the group consisting of organic solvents, low molecular weight cyclic and linear polyorganosilicone compounds and mixtures thereof, with the proviso that the proportion of the solvent, based on the total composition, is 50 - 95% by weight, **characterized in that** the constituent (A) contains
0 - 45 mol% of Q0 units,
30 - 80 mol% of Q1 units,
5 - 50 mol% of Q2 units,
0 - 20 mol% of Q3 units
wherein 100 mol% of the radical is formed by Q4, and Q0 units are Si(OR¹)₄, Q1 units are (R¹O)₃SiO_{1/2}, Q2 units are (R¹O)₂SiO_{2/2} Q3 units are (R¹O)₁SiO_{3/2} and Q4 units are SiO_{4/2} and R¹, independently of one another, are a monovalent, substituted or unsubstited hydrocarbon radical.

2. Primer composition according to Claim 1, **characterized in that** the primer composition additionally contains
(E) one or more organosilicon compounds having at least one hydrolyzable group or the partial hydrolysis product thereof, the organosilicon compound being selected from the group consisting of the compounds having the general average formula (V)
R⁵_{b}R⁶_{c}R⁷_{d}SiX_{4-b-c-d} (V)
in which
R⁵ is a monovalent, aliphatically unsaturated, substituted or unsubstituted hydrocarbon radical having 2 to 18 carbon atoms,
R⁶ is an optionally halogen-substituted, monovalent hydrocarbon radical having 1 to 18 carbon atoms,
R⁷ are R⁵_{b}R⁶_{c}SiX_{3-b-c}-R⁸- or YR⁸ radicals,
X is a hydrolyzable group selected from the groups -O₂CR⁶, -OR⁶, -NR⁶₂ , R⁶-C(=O)-N(R⁶)-, or -O-N=CR⁶₂,
Y is a monovalent radical selected from the group consisting of anhydride, aminoalkoxy, aminoalkyl, N-aminoalkylamino, acryloylxy, methacryloyloxy, sulfone, sulfonate, phosphate, phosphonate, amino, N-alkylamino, epoxy and mercapto radicals,
R⁸ is a divalent, optionally substituted hydrocarbon radical having 1 to 22 carbon atoms, which may contain heteroatoms, selected from the group N, O, and S, and
b,c,d are 0, 1, 2 or 3.

3. Primer composition according to either of Claims 1 and 2, **characterized in that** constituent (E) is selected from the group consisting of 3-(methacryloyloxy)propyltrimethoxysilane, 3-(methacryloyloxy)methyltrimethoxysilane, 3-(glycidyloxy)propyltrimethoxysilane and 1,2-bis(triethoxysilyl)ethane.

4. Primer composition according to any of Claims 1 to 3, **characterized in that** the solvent is sec-butanol or a mixture containing sec-butanol.

5. Primer composition according to any of Claims 1 to 3, the **characterized in that** primer composition contains, as solvent (D), from 70 to 90% by weight of a hydrocarbon fraction substantially comprising C7 to C10 alkanes and having a boiling range of 110-140°C or a hydrocarbon fraction substantially comprising C9 to C12 alkanes and having a boiling range of 150-180°C.

6. Primer composition according to any of Claims 1 to 4, the **characterized in that** primer composition contains, as solvent (D), from 70 to 95 percent by weight of an aliphatic alcohol selected from the group consisting of ethanol, isopropanol, n-butanol, isobutanol or sec-butanol or a mixture of two or more of these alcohols.

7. Process for the preparation of a primer composition according to any of Claims 1 to 6 by uniform dissolution or mixing of the components (A), (B), (C), (E) and, if appropriate, further optional components in the solvent (D) in a mixing unit.

8. Process according to Claim 7, **characterized in that** the composition is heated to 50 to 100°C for half an hour to 4 hours after the uniform mixing or dissolution.

9. Process according to Claim 7 or 8, **characterized in that** the primer composition is diluted with a solvent.

10. Method for improving the adhesion of silicone rubber to a substrate by application of a primer composition according to any of Claims 1 to 7 to the substrate, air-drying or baking of the primer composition in order to form a uniform primer film covering the substrate, application of a crosslinkable silicone rubber composition to the substrate covered with the primer in order to obtain a composite, curing of the composite in order to obtain an adhesive bond of a silicone rubber with a substrate.

11. Method according to Claim 10, **characterized in that** the substrate is a metal selected from the group consisting of iron, nickel, aluminum, copper, zinc, stainless steel, brass, bronze and alloys thereof, and surface-treated metal selected from the group consisting of galvanized or phosphated steel and anodized aluminum, a plastic selected from the group consisting of natural rubber, epoxy, polyester and polyamide resins, PVC and PBT, or an inorganic material selected from the group consisting of glass, glass fibers, mortar and asbestos.

12. Method according to Claim 10 or 11, **characterized in that** the primer composition applied to the substrate is dried at temperatures of from 0°C to 150°C for from 1 min to 100 hours.

13. Use of a primer composition according to any of Claims 1 to 7 for the production of composite materials by coating, adhesive bonding or casting and for the production of shaped articles.

## Revendications

1. Composition d'agent d'apprêt, contenant
(A) 100 parties en poids d'au moins un hydrolysat partiel d'un tétraalcoxysilane ou de mélanges d'au moins un tétraalcoxysilane avec son hydrolysat partiel,
(B) 25 - 400 parties en poids par rapport à 100 parties en poids du constituant (A) d'un composé choisi dans le groupe contenant les sels métalliques, les alcoxydes métalliques, les chélates métalliques, leurs hydrolysats partiels et leurs mélanges,
(C) 25 - 125 parties en poids par rapport à 100 parties en poids de constituant (A) de résine de silicone, et
(D) un solvant choisi dans le groupe contenant les solvants organiques, les composés polyorganosiliciés cycliques et linéaires de bas poids moléculaire ainsi que leurs mélanges, à condition que la proportion de solvant par rapport à la composition totale soit de 50 - 95% en poids,
**caractérisée en ce que** le constituant (A) contient
0 - 45% en mole d'unités Q0,
30 - 80% en mole d'unités Q1,
5 - 50% en mole d'unités Q2,
0 - 20% en mole d'unités Q3,
le reste jusqu'à 100% en mole étant formé par Q4 et les unités QO signifiant Si(OR¹)₄, les unités Q1 signifiant (R¹O)₃SiO_{1/2}, les unités Q2 signifiant (R¹O)₂SiO_{2/2}, les unités Q3 signifiant (R¹O)₁SiO_{3/2} et les unités Q4 signifiant SiO_{4/2} et les radicaux R¹ signifiant, indépendamment les uns des autres, un radical hydrocarboné monovalent, substitué ou non substitué.

2. Compositions d'agent d'apprêt selon la revendication 1, **caractérisées en ce que** la composition d'apprêt contient en outre
(E) un ou plusieurs composés organosiliciés comprenant au moins un groupe hydrolysable ou leur hydrolysat partiel, le composé organosilicié étant choisi dans le groupe des composés présentant la formule générale moyenne (V)
R⁵_{b}R⁶_{c}R⁷_{d}SiX_{4-b-c-d} (V)
où
R⁵ signifie un radical hydrocarboné monovalent, aliphatiquement insaturé, substitué ou non substitué comprenant 2 à 18 atomes de carbone,
R⁶ signifie un radical hydrocarboné monovalent le cas échéant substitué par halogéno comprenant 1 à 18 atomes de carbone,
R⁷ signifie des radicaux R⁵_{b}R⁶_{c}SiX_{3-b-c}-R⁸ ou YR⁸,
X représente un groupe hydrolysable choisi parmi les groupes -O₂CR⁶, -OR⁶, -NR⁶₂, R⁶-C(=O)-N(R⁶)- ou -O-N=CR⁶₂,
Y représente un radical monovalent choisi dans le groupe constitué par les radicaux anhydride, aminoalcoxy, aminoalkyle, N-aminoalkylamino, acryloxy, méthacryloxy, sulfone, sulfonate, phosphate, phosphonate, amino, N-alkylamino, époxy et mercapto,
R⁸ représente un radical hydrocarboné divalent, le cas échéant substitué comprenant 1 à 22 atomes de carbone qui peut contenir des hétéroatomes choisis dans le groupe N, O, S, et
b,c,d valent 0, 1, 2 ou 3.

3. Compositions d'agent d'apprêt selon l'une quelconque des revendications 1 ou 2, **caractérisées en ce que** le constituant (E) est choisi dans le groupe contenant le 3-(méthacryloxy)propyltriméthoxysilane, le 3-(méthacryloxy)méthyltriméthoxysilane, le 3-(glycidoxy)propyltriméthoxysilane et le 1,2-bis(triéthoxysilyl)éthane.

4. Compositions d'agent d'apprêt selon l'une quelconque des revendications 1 à 3, **caractérisées en ce que** le solvant est le sec-butanol ou un mélange contenant du sec-butanol.

5. Compositions d'agent d'apprêt selon l'une quelconque des revendications 1 à 3, **caractérisées en ce que** la composition d'agent d'apprêt contient, comme solvant (D), entre 70 et 90% en poids d'une fraction hydrocarbonée essentiellement constituée d'alcanes en C₇ à C₁₀ présentant une plage d'ébullition de 110 - 140°C ou une fraction hydrocarbonée constituée d'alcanes en C₉ à C₁₂ présentant une plage d'ébullition de 150 - 180°C.

6. Compositions d'agent d'apprêt selon l'une quelconque des revendications 1 à 4, **caractérisées en ce que** la composition d'agent d'apprêt contient, comme solvant (D), entre 70 et 95% en poids d'un alcool aliphatique choisi dans le groupe contenant l'éthanol, l'i-propanol, le n-butanol, l'i-butanol ou le sec-butanol ou un mélange de deux de ces alcools ou plus.

7. Procédé pour la préparation d'une composition d'agent d'apprêt selon l'une quelconque des revendications 1 à 6 par une dissolution régulière ou un mélange régulier des composants (A), (B), (C), (E) et le cas échéant d'autres composants éventuels dans le solvant (D) dans un appareil de mélange.

8. Procédé selon la revendication 7, **caractérisé en ce que** la composition est chauffée après le mélange régulier ou la dissolution régulière pendant une demi-heure à 4 heures à 50 jusqu'à 100°C.

9. Procédé selon la revendication 7 ou 8, **caractérisé en ce que** la composition d'agent d'apprêt est diluée avec un solvant.

10. Procédé pour améliorer l'adhérence de caoutchouc de silicone sur un substrat par application d'une composition d'agent d'apprêt selon l'une quelconque des revendications 1 à 7 sur le substrat, soufflage ou fixation thermique de la composition d'agent d'apprêt pour former un film d'agent d'apprêt régulier, recouvrant le substrat, application d'une composition de caoutchouc de silicone sur le substrat revêtu de l'agent d'apprêt pour obtenir un composite, durcissement du composite pour obtenir un assemblage adhésif d'un caoutchouc de silicone avec un substrat.

11. Procédé selon la revendication 10, **caractérisé en ce que** le substrat est un métal choisi dans le groupe contenant le fer, le nickel, l'aluminium, le cuivre, le zinc, l'acier noble, le laiton, le bronze et leurs alliages, ainsi qu'un métal traité en surface choisi dans le groupe contenant l'acier zingué ou phosphaté et l'aluminium anodisé, un matériau synthétique choisi dans le groupe contenant le caoutchouc naturel, les résines époxy, polyester, polyamide, le PVC et le PBT, ou un matériau inorganique choisi dans le groupe contenant le verre, les fibres de verre, le mortier et l'asbeste.

12. Procédé selon la revendication 10 ou 11, **caractérisé en ce que** la composition d'agent d'apprêt appliquée sur le substrat est séchée à des températures entre 0°C et 150°C pendant 1 min à 100 heures.

13. Utilisation d'une composition d'agent d'apprêt selon l'une quelconque des revendications 1 à 7 pour la production de matériaux composites par revêtement, collage, coulage et pour la production d'objets moulés.
